# EUROPEAN PATENT APPLICATION

(11) **EP 4 832 625 A1**
(43) Date of publication of application: **28.10.2026**
(21) Application number: 23962298.8
(22) Date of filing: 22.12.2023
(51) Int. Cl.: H04W 72/1268

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); SHIBAIKE, Naoya, Tokyo 100-6150 (JP); NAGATA, Satoshi, Tokyo 100-6150 (JP); WANG, Jing, Beijing 100190 (CN); SUN, Weiqi, Beijing 100190 (CN); CHEN, Lan, Beijing 100190 (CN); LI, Xiang, Beijing 100190 (CN); HOU, Xiaolin, Beijing 100190 (CN)
(74) Representative: Hoffmann Eitle
(86) International application number: PCT/JP2023/046252
(87) International publication number: WO 2025/134382

(57) **Abstract**

According to an aspect of the present disclosure, a terminal includes: a control section assuming application of at least one of a condition related to a beam, a condition related to a physical cell identifier (PCI), a condition related to a transmission/reception timing, a condition related to transmission power control, a condition related to a specific identifier, and a condition related to a resource for a plurality of sounding reference signal (SRS) resource sets and one or more SRS resources in the plurality of SRS resource sets; and a transmitting section configured to transmit an SRS using the one or more SRS resources to which the condition is applied. According to an aspect of the present disclosure, beam measurement/reporting can be appropriately performed.

## Description

### Technical Field

The present disclosure relates to a terminal, a radio communication method, and a base station in next-generation mobile communication systems.

### Background Art

In a universal mobile telecommunications system (UMTS) network, specifications of long term evolution (LTE) have been drafted for the purpose of further increasing data rates, providing low latency, and the like (NPL 1). Furthermore, the specifications of LTE-Advanced (3GPP Rel. 10 to 14) have been drafted for the purpose of further increasing capacity and advancement of LTE (third generation partnership project (3GPP (registered trademark)) release (Rel.) 8 and 9).

Successor systems to LTE (for example, also referred to as 5th generation mobile communication system (5G), 5G+ (plus), 6th generation mobile communication system (6G), New Radio (NR), or 3GPP Rel. 15 and subsequent releases) are also being studied.

### Citation List

### Non Patent Literature

NPL 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

### Summary of Invention

### Technical Problem

In future radio communication systems (for example, Rel. 20 or later), it has been studied that a terminal (a user terminal or user equipment (UE)) performs cell-free communication in which communication is implemented using a unit smaller than an existing cell.

However, studies on beam measurement/reporting in cell-free communication are not sufficient. In this case, communication throughputs may decrease.

Accordingly, an object of the present disclosure is to provide a terminal, a radio communication method, and a base station capable of appropriately performing beam measurement/reporting.

### Solution to Problem

According to an aspect of the present disclosure, a terminal includes: a control section assuming application of at least one of a condition related to a beam, a condition related to a physical cell identifier (PCI), a condition related to a transmission/reception timing, a condition related to transmission power control, a condition related to a specific identifier, and a condition related to a resource for a plurality of sounding reference signal (SRS) resource sets and one or more SRS resources in the plurality of SRS resource sets; and a transmitting section configured to transmit an SRS using the one or more SRS resources to which the condition is applied.

### Advantageous Effects of Invention

According to an aspect of the present disclosure, beam measurement/reporting can be appropriately performed.

### Brief Description of Drawings

[FIGS. 1A and 1B] FIGS. 1A and 1B are diagrams illustrating an example of RRC information elements regarding a CSI reporting configuration and a CSI resource configuration.
[FIGS. 2A and 2B] FIGS. 2A and 2B are diagrams illustrating an example of RRC information elements regarding an NZP CSI-RS resource set and a CSI-SSB resource set.
[FIG. 3] FIG. 3 is a diagram illustrating an example of RRC information elements regarding a TCI state.
[FIG. 4] FIG. 4 is a diagram illustrating an example of an RRC information element "CSI-ReportConfig" in Rel. 16.
[FIG. 5] FIG. 5 is a diagram illustrating an example of CSI reporting in Rel. 15 NR.
[FIG. 6] FIG. 6 is a diagram illustrating an example of CSI reporting in a case where an extended group-based beam reporting is performed.
[FIGS. 7A and 7B] FIGS. 7A and 7B are diagrams illustrating an outline of MIMO.
[FIGS. 8A and 8B] FIGS. 8A and 8B are diagrams illustrating an outline of a cellular system.
[FIGS. 9A to 9C] FIGS. 9A to 9C are diagrams illustrating an example of an outline of Assumption 1 of the cell-free configuration.
[FIG. 10] FIG. 10 is a diagram illustrating an example of allocation of an SRS resource set/SRS resource according to Option 1-7.
[FIG. 11] FIG. 11 is a diagram illustrating an example of allocation of SRS resource sets/SRS resources according to Variation 1 of a first embodiment.
[FIG. 12] FIG. 12 is a diagram illustrating an example of allocation of SRS resource sets/SRS resources according to Variation 2 of the first embodiment.
[FIG. 13] FIG. 13 is a diagram illustrating an example of application of a beam according to a fourth embodiment.
[FIG. 14] FIG. 14 is a diagram illustrating an example of a schematic configuration of a radio communication system according to an embodiment.
[FIG. 15] FIG. 15 is a diagram illustrating an example of a configuration of a base station according to one embodiment.
[FIG. 16] FIG. 16 is a diagram illustrating an example of a configuration of a user terminal according to one embodiment.
[FIG. 17] FIG. 17 is a diagram illustrating an example of a hardware configuration of the base station and the user terminal according to one embodiment.
[FIG. 18] FIG. 18 is a diagram illustrating an example of a vehicle according to an embodiment.

### Description of Embodiments

### (CSI)

In NR, a UE measures a channel state by using a reference signal (or a resource for the reference signal) and feeds back (reports) Channel State Information (CSI) to a network (for example, a base station).

The UE may measure the channel state using at least one of a Channel State Information Reference Signal (CSI-RS), a Synchronization Signal/Physical Broadcast Channel (SS/PBCH) block, a Synchronization Signal (SS), a Demodulation Reference Signal (DMRS), and the like.

A CSI-RS resource may include at least one of a Non Zero Power (NZP) CSI-RS resource, a Zero Power (ZP) CSI-RS resource, and a CSI Interference Measurement (CSI-IM) resource.

A resource for measuring a signal component for CSI may be referred to as a Signal Measurement Resource (SMR) or a Channel Measurement Resource (CMR). The SMR (CMR) may include, for example, an NZP CSI-RS resource for channel measurement, an SSB, and the like.

A resource for measuring an interference component for CSI may be referred to as an Interference Measurement Resource (IMR). The IMR may include, for example, at least one of the NZP CSI-RS resource for interference measurement, an SSB, a ZP CSI-RS resource, and a CSI-IM resource.

The SS/PBCH block is a block including a synchronization signal (for example, Primary Synchronization Signal (PSS) and Secondary Synchronization Signal (SSS)) and a PBCH (and the corresponding DMRS), and may be called an SS block (SSB) or the like.

Note that, the CSI may include at least one of a Channel Quality Indicator (CQI), a Precoding Matrix Indicator (PMI), a CSI-RS Resource Indicator (CRI), an SS/PBCH Block Resource Indicator (SSBRI), a Layer Indicator (LI), a Rank Indicator (RI), an L1-RSRP (Layer 1 Reference Signal Received Power), L1-RSRQ (Reference Signal Received Quality), an L1-SINR (Signal to Interference plus Noise Ratio), an L1-SNR (Signal to Noise Ratio), and the like.

The CSI may have a plurality of parts. A CSI Part 1 may include information with a relatively small number of bits (for example, the RI). A CSI Part 2 may include information with a relatively large number of bits (for example, the CQI) such as information determined based on the CSI Part 1.

Furthermore, the CSI may also be classified into several CSI types. The type and size of information to be reported may be different depending on the CSI type. For example, a CSI type configured for performing communication using a single beam (also referred to as type 1 (type I) CSI, CSI for a single beam, or the like), and a CSI type configured for performing communication using multiple beams (also referred to as type 2 (type II) CSI, CSI for multiple beams, or the like) may be defined. The application of CSI types is not limited to the foregoing types.

As a CSI feedback method, Periodic CSI (P-CSI) reporting, Aperiodic CSI (A-CSI) reporting, Semi-Persistent CSI (SP-CSI) reporting and the like are under study.

The UE may be notified of CSI measurement configuration information by using higher layer signaling, physical layer signaling, or a combination thereof.

In the present disclosure, the higher layer signaling may be any of, for example, Radio Resource Control (RRC) signaling, Medium Access Control (MAC) signaling, broadcast information, and the like, or a combination thereof.

For example, a MAC Control Element (MAC CE), a MAC Protocol Data Unit (PDU), or the like may be used for the MAC signaling. The broadcast information may be, for example, a master information block (MIB), a system information block (SIB), remaining minimum system information (RMSI), other system information (OSI), or the like.

The physical layer signaling may be, for example, Downlink Control Information (DCI).

The CSI measurement configuration information may be configured using, for example, the RRC information element "CSI-MeasConfig". The CSI measurement configuration information may include CSI resource configuration information (RRC information element "CSI-ResourceConfig"), CSI reporting configuration information (RRC information element "CSI-ReportConfig"), and the like. The CSI resource configuration information is related to a resource for CSI measurement, and the CSI reporting configuration information is related to how the UE performs CSI reporting.

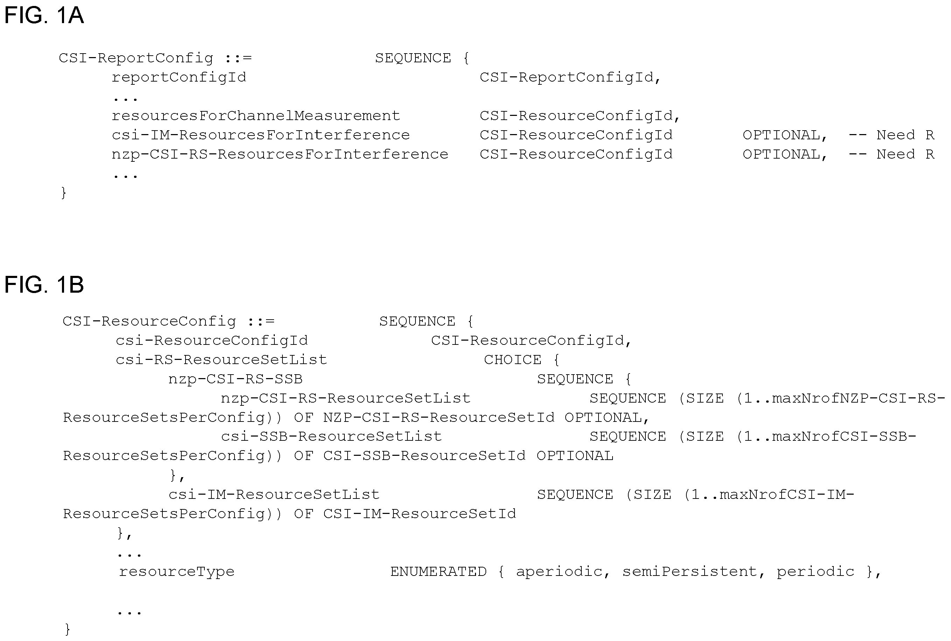

FIGS. 1A and 1B are diagrams illustrating an example of RRC information elements regarding CSI reporting configuration and a CSI resource configuration. In this example, an excerpt of a field (which may be referred to as a parameter) included in an information element is illustrated. FIGS. 1A and 1B are described using the abstract syntax notation one (ASN.1) notation. Note that, drawings relating to other RRC information elements (or RRC parameters) of the present disclosure are also described in the similar notation.

As illustrated in FIG. 1A, the CSI reporting configuration information ("CSI-ReportConfig") includes resource information for channel measurement ("resourcesForChannelMeasurement"). Furthermore, the CSI reporting configuration information may include resource information for interference measurement (for example, NZP CSI-RS resource information for interference measurement ("nzp-CSI-RS-ResourcesForInterference"), CSI-IM resource information for interference measurement ("csi-IM-ResourcesForInterference"), and the like). These pieces of resource information correspond to CSI resource configuration information IDs (Identifiers) ("CSI-ResourceConfigId").

Note that the CSI resource configuration information IDs (which may be referred to as CSI resource configuration IDs) corresponding to respective pieces of resource information may have one or more identical values or may each have different values.

As illustrated in FIG. 1B, the CSI resource configuration information ("CSI-ResourceConfig") may include a CSI resource configuration information ID, CSI-RS resource set list information ("csi-RS-ResourceSetList"), a resource type ("resourceType"), and the like. The CSI-RS resource set list may include at least one of NZP CSI-RS and SSB information ("nzp-CSI-RS-SSB") for measurement and CSI-IM resource set list information ("csi-IM-ResourceSetList").

The resource type represents a behavior of a time domain of the resource configuration, and "aperiodic", "semi-persistent", and "periodic" can be configured. For example, the corresponding respective CSI-RS may be referred to as A-CSI-RS, SP-CSI-RS, or P-CSI-RS.

Note that, a resource for channel measurement may be used for calculation of, for example, a CQI, PMI, L1-RSRP, and the like. Furthermore, a resource for interference measurement may be used for calculation of the L1-SINR, L1-SNR, L1-RSRQ, and other indicators regarding interference.

In a case where the interference measurement is performed using CSI-IM, each CSI-RS for channel measurement may be associated with the CSI-IM resources from a resource perspective, based on the CSI-RS resources in the corresponding resource set, and the CSI-IM resource order.

The "nzp-CSI-RS-SSB" may include NZP CSI-RS resource set list information ("nzp-CSI-RS-ResourceSetList") and SSB resource set list information for CSI measurement ("csi-SSB-ResourceSetList"). These pieces of list information correspond to one or more NZP CSI-RS resource set IDs ("NZP-CSI-RS-ResourceSetId") and CSI-SSB resource set IDs ("CSI-SSB-ResourceSetId"), and may be used for specifying resources to be measured.

The NZP CSI-RS resource set list information ("nzp-CSI-RS-ResourceSetList") may include NZP CSI-RS resource set IDs ("NZP-CSI-RS-ResourceSetId") of a maximum number ("maxNrofNZP-CSI-RS-ResourceSetsPerConfig") of NZP CSI-RS resource sets per CSI resource configuration. The maximum number ("maxNrofNZP-CSI-RS-ResourceSetsPerConfig") of NZP CSI-RS resource sets per CSI resource configuration is at most 16 in a case where the resource type is "aperiodic," and otherwise may be 1 (in a case where the resource type is "semi-persistent" or "periodic").

The SSB resource set list information for CSI measurement ("csi-SSB-ResourceSetList") may include a CSI-SSB resource set ID ("CSI-SSB-ResourceSetId") of a maximum number ("maxNrofCSI-SSB-ResourceSetsPerConfig") of SSB resource sets for CSI measurement per CSI resource configuration. The maximum number ("maxNrofCSI-SSB-ResourceSetsPerConfig") of SSB resource sets for CSI measurement per CSI resource configuration may be 1.

The CSI-IM resource set list information ("csi-IM-ResourceSetList") may include a CSI-IM resource set ID ("CSI-IM-ResourceSetId") of the maximum number ("maxNrofCSI-IM-ResourceSetsPerConfig") of CSI-IM resource sets per CSI resource configuration. The maximum number ("maxNrofCSI-IM-ResourceSetsPerConfig") of CSI-IM resource sets per CSI resource configuration is at most 16 in a case where the resource type is "aperiodic", and otherwise may be 1.

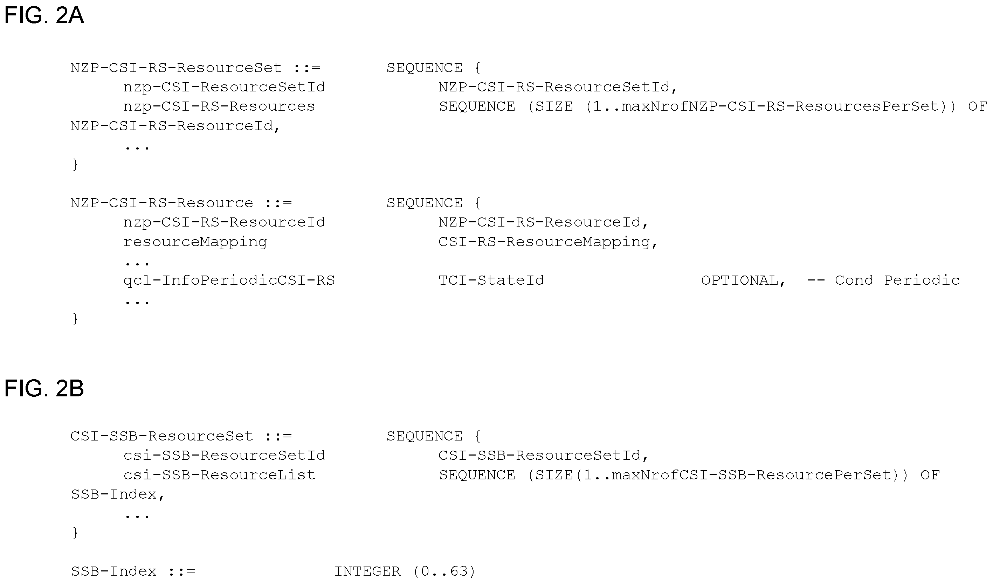

FIGS. 2A and 2B are diagrams illustrating an example of RRC information elements regarding an NZP CSI-RS resource set and a CSI-SSB resource set.

As illustrated in FIG. 2A, the NZP CSI-RS resource set information ("NZP-CSI-RS-ResourceSet") includes the NZP CSI-RS resource set ID and one or more NZP CSI-RS resource IDs ("NZP-CSI-RS-ResourceId").

NZP CSI-RS resource information ("NZP-CSI-RS-Resource") may include the NZP CSI-RS resource ID and an ID ("TCI-stateId") of a transmission configuration indication state. The TCI states will be described subsequently.

As illustrated in FIG. 2B, CSI-SSB resource set information ("CSI-SSB-ResourceSet") includes the CSI-SSB resource set ID and one or more pieces of SSB index information ("SSB-Index"). The SSB index information is, for example, an integer from 0 to 63, and may be used for identifying the SSB in an SS burst.

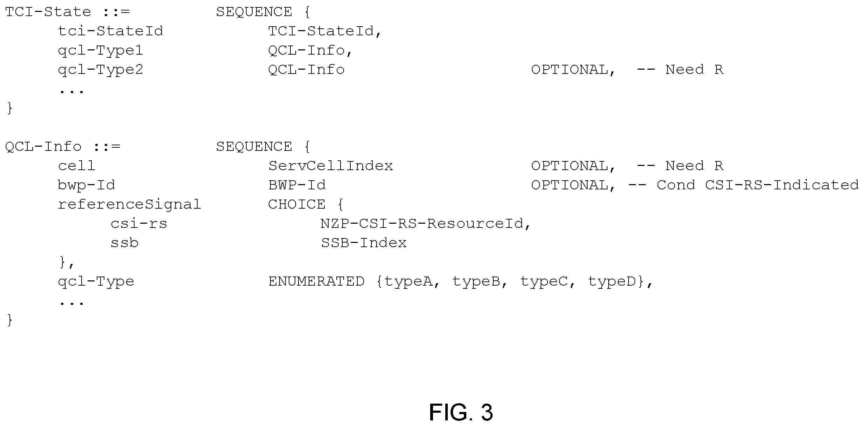

FIG. 3 is a diagram illustrating an example of an RRC information element regarding a TCI state.

The TCI state is information regarding Quasi-Co-Location (QCL) of a channel or a signal, and may also be referred to as a spatial reception parameter, spatial relation info, or the like. The TCI state may be configured or specified for the UE per channel or per signal.

As illustrated in FIG. 3, the TCI state information ("TCI-State") may include a TCI state ID and one or more pieces of QCL information ("QCL-Info"). The QCL information may include information regarding a reference signal of a QCL source (RS-related information ("referenceSignal")) and/or information indicating a QCL type (QCL type information ("qcl-Type")). The RS-related information may include information such as an RS index (for example, NZP CSI-RS resource ID, SSB index), an index of a serving cell, and an index of a bandwidth part (BWP) in which the RS is located.

For the signal and/or the channel (expressed as signal/channel), the UE may control reception processing (for example, at least one of reception, demapping, demodulation, decoding, reception beam determination, and the like), transmission processing (for example, at least one of transmission, mapping, modulation, encoding, Tx beam determination, and the like), and so on, based on the TCI state corresponding to the TCI state ID associated with the signal/channel.

As illustrated in FIG. 2A, for a P-CSI-RS, a related TCI state may be configured by RRC. Note that for the P-CSI-RS, the SP-CSI-RS, and the A-CSI-RS, the related TCI state may be discriminated based on higher layer signaling, physical layer signaling, or a combination thereof.

### (TCI, Spatial Relation, and QCL)

In NR, controlling reception processing (for example, at least one of reception, demapping, demodulation, and decoding) and transmission processing (for example, at least one of transmission, mapping, precoding, modulation, and coding) in a UE of at least one of a signal and a channel (expressed as a signal/channel) based on a transmission configuration indication state (TCI state) is being studied.

The TCI state may represent what is applied to a downlink signal/channel. A state corresponding to the TCI state applied to an uplink signal/channel may be expressed as a spatial relation.

The TCI state is information on a quasi-co-location (QCL) of the signal/channel and may also be referred to as a spatial Rx parameter, spatial relation information, or the like. The TCI state may be configured in the UE for each channel or each signal.

The QCL is an indicator indicating a statistical property of the signal/channel. For example, this may mean that, when a certain signal/channel and another signal/channel have a QCL relationship, it may be assumed that at least one of a Doppler shift, a Doppler spread, an average delay, a delay spread, and a spatial parameter (for example, the spatial Rx parameter) is the same (the QCL for at least one of the foregoing) between the plurality of different signals/channels.

It is noted that the spatial Rx parameter may correspond to a UE reception beam (for example, a reception analog beam), and the beam may be specified based on a spatial QCL. A QCL (or at least one element of the QCL) in the present disclosure may be interchanged with a spatial QCL (sQCL).

A plurality of types of QCL (QCL types) may be defined. For example, parameters (or parameter sets) of four different QCL types A to D that can be assumed to be identical may be provided, and the corresponding parameters (which may be referred to as QCL parameters) are described as follows:
- QCL type A (QCL-A): Doppler shift, Doppler spread, average delay, and delay spread;
- QCL type B (QCL-B): Doppler shift and Doppler spread;
- QCL type C (QCL-C): Doppler shift and average delay; and
- QCL type D (QCL-D): spatial Rx parameter.

It may be referred to as a QCL assumption for the UE to assume that a certain control resource set (CORESET), channel, or reference signal has a specific QCL (for example, QCL type D) relationship with another CORESET, channel, or reference signal.

Based on a TCI state of the signal/channel or the QCL assumption, the UE may also determine at least one of a transmission beam (Tx beam) and a reception beam (Rx beam) of the corresponding signal/channel.

The TCI state may be, for example, information on the QCL of a target channel (in other words, a reference signal (RS) for the corresponding channel) and another signal (for example, another RS). The TCI state may be configured (indicated) by higher layer signaling, physical layer signaling, or a combination thereof.

It is noted that, a channel/signal to which the TCI state is applied may be referred to as a target channel/reference signal (RS), simply a target, or the like, and the other signal may be referred to as a reference reference signal (reference RS), a source RS, simply a reference, or the like.

A channel for which a TCI state or spatial relation is configured (specified) may be, for example, at least one of a physical downlink shared channel (PDSCH), a physical downlink control channel (PDCCH), a physical uplink shared channel (PUSCH), and a physical uplink control channel (PUCCH).

In addition, an RS having a QCL relationship with the channel may be, for example, at least one of a synchronization signal block (SSB), a channel state information reference signal (CSI-RS), a sounding reference signal (SRS), a tracking CSI-RS (also referred to as a tracking reference signal (TRS)), a QCL detection reference signal (also referred to as a QRS), a demodulation reference signal (DMRS), or the like.

The SSB is a signal block including at least one of a primary synchronization signal (PSS), a secondary synchronization signal (SSS), and a broadcast channel (physical broadcast channel (PBCH)). The SSB may be referred to as an SS/PBCH block.

An RS of QCL type X in a TCI state may mean an RS in a QCL type X relationship with (DMRS of) a certain channel/signal, and this RS may be referred to as a QCL source of QCL type X in the TCI state.

### (Beam Management)

In Rel. 15 NR, the Beam Management (BM) method has been studied. In beam management, beam selection is performed based on the L1-RSRP reported by the UE. Changing (switching) a beam of a signal/channel may be equivalent to changing at least one of a TCI state or a QCL assumption of the signal/channel.

The UE may report (transmit) a measurement result for beam management using an uplink control channel (physical uplink control channel (PUCCH)) or an uplink shared channel (physical uplink shared channel (PUSCH)). The measurement result may be, for example, CSI including at least one of the L1-RSRP, L1-RSRQ, L1-SINR, L1-SNR, and the like.

A measurement result (for example, CSI) reported for beam management may be referred to as beam measurement, beam measurement report, beam reporting, beam report CSI, or the like.

The CSI measurement for the beam report may include interference measurement. The UE may measure channel quality, interference, and the like using a resource for CSI measurement, and derive the beam report.

The beam report may include a result of at least one of channel quality measurement and interference measurement. The result of the channel quality measurement may include, for example, the L1-RSRP. The result of the interference measurement may include the L1-SINR, L1-SNR, L1-RSRQ, and other indicators regarding interference (for example, any indicator other than the L1-RSRP).

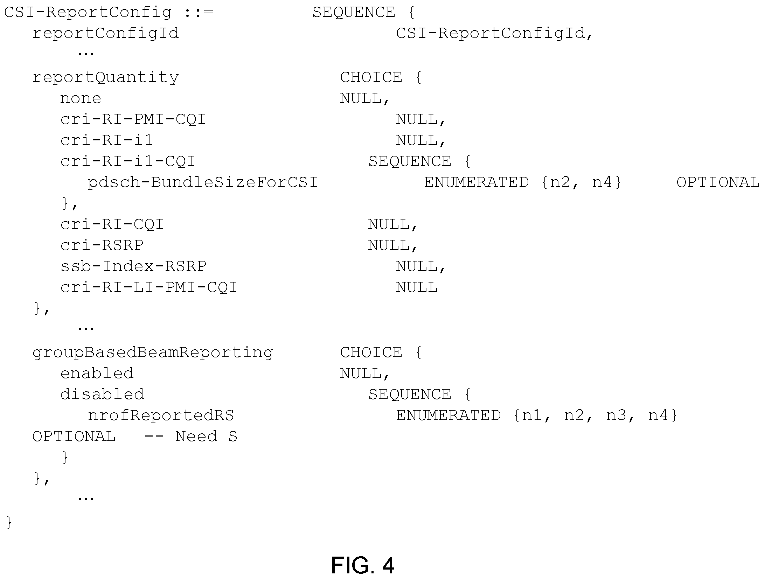

The CSI reporting may be performed based on the CSI reporting setting configured with the higher layer parameter. FIG. 4 is an example of an RRC information element "CSI-ReportConfig" in Rel. 16. FIG. 4 is an excerpt of another part of the same CSI reporting configuration information (CSI-ReportConfig) as that in FIG. 1A.

The CSI reporting configuration information may include a "report quantity" (which may be represented by an RRC parameter "reportQuantity") that is information of a parameter to be reported in one report instance (for example, one CSI). The report quantity is defined by the type of the ASN.1 object such as "choice". Therefore, one of the parameters (cri-RSRP, ssb-Index-RSRP, and the like) defined as the report quantity is configured.

The UE in which the higher layer parameter (for example, the RRC parameter "groupBasedBeamReporting" for group-based beam reporting) included in the CSI reporting configuration information is disabled may include, for each report configuration, different beam measurement resource IDs (for example, SSBRI, CRI) having the number of higher layer parameters (for example, the RRC parameter "nrofReportedRS" indicating the number of reported RSs) included in the CSI reporting configuration information and measurement results (for example, L1-RSRP) corresponding to the respective IDs in the beam report (one report instance).

The UE in which groupBasedBeamReporting is configured to be enabled reports CRI/SSBRI (for example, one group of CRI/SSBRI) in units of groups for each report configuration. The group includes a plurality of (for example, two) CRI/SSBRIs. A plurality of (for example, two) CRIs/SSBRIs may mean that the CRIs/SSBRIs are simultaneously received by the UE.

For example, the UE in which groupBasedBeamReporting is configured to be enabled may include, for each report configuration, two different beam measurement resource IDs (for example, CRI/SSBRI) and two measurement results (for example, L1-RSRP) respectively corresponding to the IDs in the beam report. The two beam measurement resources (CSI-RS resources or SSB resources) may be simultaneously received by the UE using one spatial domain reception filter or may be simultaneously received by the UE using a plurality of simultaneous spatial domain reception filters.

Furthermore, the NZP CSI-RS resource set information illustrated in FIG. 2A may include information regarding repetition in a resource in the resource set. The information regarding the repetition may indicate, for example, 'on' or 'off'. Note that 'on' may be expressed as 'enabled' or 'valid,' and 'off' may be expressed as 'disabled' or 'invalid'.

For example, for a resource set for which repetition is configured to be 'on,' the UE may assume that a resource in the resource set has been transmitted using the same downlink spatial domain transmission filter. In this case, the UE may assume that the resource in the resource set has been transmitted using the same beam (for example, from the same base station using the same beam).

For a resource set for which repetition is configured to be 'off', the UE may perform control such that the UE should not assume (or may not assume) that the resource in the resource set has been transmitted using the same downlink spatial domain transmission filter. In this case, the UE may assume that the resources in the resource set are not transmitted using the same beam (transmitted using different beams). In other words, the UE may assume that the base station performs beam sweeping for a resource set for which repetition is configured as 'off'.

In Rel. 15 NR, cri-RSRP and ssb-Index-RSRP of the report quantities are related to beam management. The UE in which the cri-RSRP is configured as the report quantity reports the CRI and the L1-RSRP corresponding to the CRI. The UE in which the ssb-Index-RSRP is configured as the report quantity reports the SSBRI and the L1-RSRP corresponding to the SSBRI.

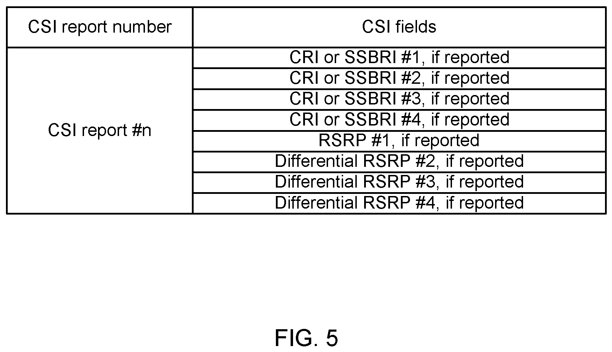

FIG. 5 is a diagram illustrating an example of CSI reporting in Rel. 15 NR. FIG. 5 illustrates a mapping order of CSI fields included in one CSI reporting (nth CSI reporting #n) for CSI/RSRP or SSBRI/RSRP reporting as defined in Rel. 15.

The CSI reporting of FIG. 5 may include one or more sets of CRI/SSBRI and RSRP. The number of these sets may be configured by a higher layer parameter (for example, the RRC parameter "nrofReportedRS") indicating the number of reference signal resources to be reported.

For L1-RSRP reporting, in a case where nrofReportedRS is configured to be 1 (the value is 'n1'), RSRP #1, which is a field of a predetermined number of bits (for example, m bits) indicating the L1-RSRP of the largest measurement value, is included in the CSI reporting. In Rel. 15 NR, m = 7.

For L1-RSRP reporting, when nrofReportedRS is configured to be larger than 1, or groupBasedBeamReporting is enabled, the UE uses differential L1-RSRP-based reporting. Specifically, the UE includes, in the same CSI reporting (reporting instance), RSRP #1 indicating the L1-RSRP having the largest measurement value, and a differential RSRP #k calculated (as a difference from the measurement value, for example) by referring to the largest measurement value for the L1-RSRP having the k-th largest (in FIG. 5, k = 2, 3, and 4) measurement value. Here, the differential RSRP #k may be a field of bits with the number (for example, n bits) smaller than the predetermined number. In Rel. 15 NR, n=4.

For example, for each group, seven bits of the absolute RSRP value for the first beam (range from -140 to -44 dBm using 1 dB step size) and four bits of the differential RSRP value for the second beam are reported.

Note that when groupBasedBeamReporting is enabled, the UE includes RSRP #1 and differential RSRP #2 in the same CSI reporting.

The CRI/SSBRI #k in FIG. 5 is a field indicating the CRI/SSBRI corresponding to the RSRP #k or the differential RSRP #k (included in a case where the RSRP #k or the differential RSRP #k is reported).

Note that in NR Rel. 16 and beyond, nrofReportedRS may be a value of 4 or more, or may be 4 or more. The CSI reporting may include four or more sets of CRI/SSBRI and RSRP. The above m and n are not limited to 7 and 4, respectively.

In addition, in NR Rel. 16 and beyond, the L1-SINR reporting may be performed. For the L1-SINR reporting, contents obtained by replacing RSRP in the L1-RSRP reporting described above with SINR may be applied. Note that, in this case, the configuration/parameter for the SINR may be different from the configuration/parameter for the RSRP, and for example, the nrofReportedRS may be interchanged with nrofReportedRSForSINR indicating the number of reference signal resources to be reported for the SINR.

For L1-RSRP computation, the UE may be configured with CSI-RS resource settings for a maximum of 16 CSI-RS resource sets, including a maximum of 64 resources in each resource set. The total number of different CSI-RS resources across all resource sets may be 128 or less.

For L1-SINR computation, in channel measurement, the UE may be configured with CSI-RS resource settings for a maximum of 16 CSI-RS resource sets including a maximum of 64 CSI-RS resources or a maximum of 64 SS/PBCH blocks in total.

In a case where one resource setting linked to CSI-ReportConfig has a plurality of aperiodic resource sets for a UE for which the information of the CSI aperiodic trigger state list (higher layer parameter "CSI-AperiodicTriggerStateList") is configured, only one of the aperiodic CSI-RS resources of that resource setting may be associated with the trigger state. At this time, the UE may be configured using the higher layer according to each resource setting for each trigger state so as to select one CSI-IM/NZP CSI-RS resource set from the resource settings.

The UE may not assume (or expect) that more than 64 NZP CSI-RS resources and/or an SS/PBCH block resources have been configured in the channel measurement resource setting of CSI-ReportConfig for which the report quantity (higher layer parameter reportQuantity) is configured as "none," "cri-RI-CQI," "cri-RSRP," "ssb-Index-RSRP," "cri-SINR," or "ssb-Index-SINR."

In a case where CSI-ReportConfig having a report quantity (higher layer parameter reportQuantity) configured as "cri-RSRP," "cri-SINR," or "none" is configured for the UE, and the CSI-ReportConfig links to a resource setting with a higher layer parameter resourceType configured as "aperiodic," the UE may not assume that more than 16 CSI-RS resources are configured in a CSI-RS resource set included in the resource setting.

In a case where CSI-ReportConfig, for which the report quantity (higher layer parameter reportQuantity) is configured as "cri-RSRP," "cri-RI-PMI-CQI," "cri-RI-i1," "cri-RI-i1-CQI," "cri-RI-CQI," "cri-RI-LI-PMI-CQI," or "cri-SINR", is configured for the UE and two or more resources for channel measurement are configured in the corresponding resource set, the UE may derive a CSI parameter other than the CRI, which is conditional upon the reported CRI. Here, CRI k(k≥0) may correspond to the configured (k+1)th entry of related nzp-CSI-RS-Resources in the corresponding NZP-CSI-RS-ResourceSet for channel measurement and the (k+1)th entry of related csi-IM-Resource in the csi-IM-ResourceSet or the (k+1)th entry of related nzp-CSI-RS-Resources in the corresponding NZP-CSI-RS-ResourceSet for interference measurement (when reportQuantity is configured as "cri-SINR" in CSI-ReportConfig). In a case where two CSI-RS resources are configured, each resource may include a maximum of 16 CSI-RS ports. In a case where from three to eight CSI-RS resources are configured, each resource may include a maximum of eight CSI-RS ports.

In a case where CSI-ReportConfig having a report quantity (higher layer parameter reportQuantity) configured as "ssb-Index-RSRP" is configured for the UE, the SSBRI may be reported. Here, SSBRI k(k≥0) may correspond to the (k+1)th entry configured in a related csi-SSB-ResourceList in a corresponding CSI-SSB-ResourceSet.

In a case where CSI-ReportConfig having a report quantity (higher layer parameter reportQuantity) configured as "ssb-Index-SINR" is configured for the UE, the L1-SINR, which is conditional upon the reported SSBRI, may be derived. Here, SSBRI k(k≥0) may correspond to the configured (k+1)th entry of the related csi-SSB-ResourceList in the corresponding CSI-SSB-ResourceSet for channel measurement and the (k+1)th entry of the related csi-IM-Resource in the csi-IM-ResourceSet or the (k+1)th entry of the related nzp-CSI-RS-Resources in the corresponding NZP-CSI-RS-ResourceSet for interference measurement.

### (Extended Group-Based Beam Reporting)

In preparation for a future radio communication system (for example, Rel. 17 and subsequent releases), beam management-related extensions (may be referred to as beam reporting suitable for a plurality of TRPs, or extended group-based beam reporting, for example) for a user terminal (user terminal, User Equipment (UE)) having a plurality of panels (multi-panels), a plurality of transmission/reception points (TRP), and the like are under study.

The above-described groupBasedBeamReporting can be reported in one report for one group including a plurality of (for example, two) CRI/SSBRIs. Therefore, the groupBasedBeamReporting is appropriate when multi-TRP transmission, multi-panel reception, or the like is applied. For example, the same can be used in order to report the best beam of TRP1 as RSRP #1 and the best beam of TRP2 as the differential RSRP #2.

In Rel. 15 and 16, a UE in which group-based beam reporting is configured to be enabled can only report one group including two different CRIs/SSBRIs (which may be read as beam indexes) for each report configuration. Therefore, it is assumed that the number of groups that can be reported by the group-based beam reporting is extended toward Rel. 17.

For example, two resource sets for channel measurement (for example, a CMR set) may be configured/triggered to a periodic/semi-persistent/aperiodic resource type. The two resource sets for channel measurement (for example, a CMR set) may be, for example, two CSI-SSB-resource sets/two NZP-CSI-RS-resource sets. The UE may be configured to be able to report groups of up to four CRI/SSBRIs. The number of groups that can be reported (alternatively, the number of candidates that is 1/2/3/4) may be configured by a higher layer parameter.

Each group has multiple (for example, two) CRI/SSBRIs, and the CRI/SSBRI of each group may be respectively selected from two sets of CSI resources for reporting configuration (for example, report setting). In addition, the two CRI/SSBRIs of each group may mean that the UE can perform simultaneous reception (for example, simultaneous reception using one spatial domain reception filter).

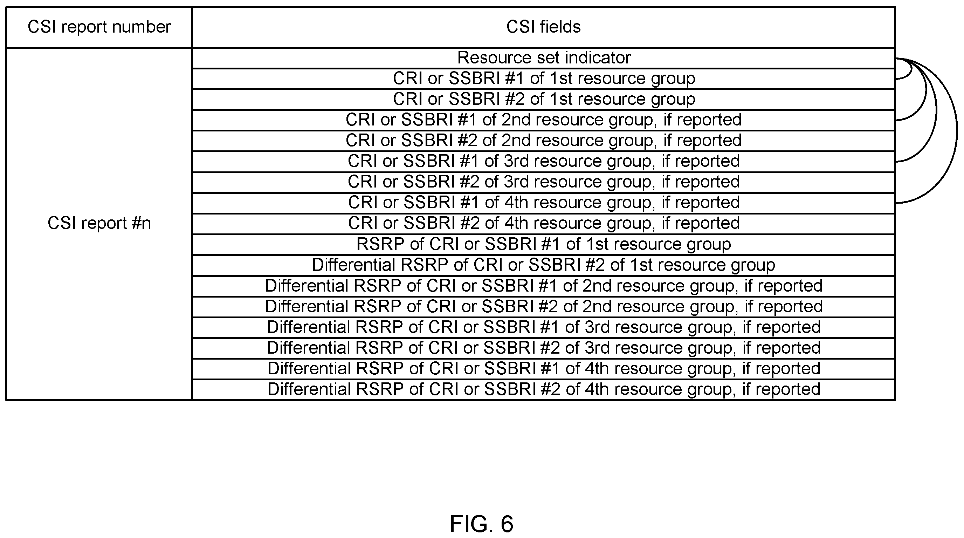

FIG. 6 is a diagram illustrating an example of CSI reporting in a case where an extended group-based beam reporting is performed. FIG. 6 illustrates a mapping order of CSI fields included in one reporting (for example, nth CSI reporting #n) for group-based CSI/RSRP or SSBRI/RSRP reporting.

CSI reporting may include up to X (for example, X=4) resource groups. Each group includes a plurality of (for example, two) CRI/SSBRIs. Here, a case where CRI or SSBRI #1 and CRI or SSBRI #2 are reported as each resource group is shown.

A resource set indicator (for example, a resource set indicator) may be included in the CSI field. A value of the resource set indicator may indicate a channel measurement resource set in which CRI or SSBRI #1 of the first resource group is reported. For example, a 1-bit resource set indicator with a value of 0 or 1 may indicate the first or second channel measurement resource set, respectively, from which the CRI or SSBRI #1 of the first resource group may be reported. All the remaining resource groups (for example, a case where there are other resource groups to be reported) follow the same mapping order as the first resource group. For example, CRI or SSBRI #1 of all the remaining resource groups may be reported (alternatively, selected) from the channel measurement resource set indicated by the resource set indicator.

That is, the CRI or SSBRI #1 of each group may be reported (alternatively, selected) from the resource set indicated by the resource set indicator (for example, a resource set indicator), and the CRI or SSBRI #2 may be reported (alternatively, selected) from another resource set. In this way, in all resource groups, the CRI or SSBRI #1 and the CRI or SSBRI #2 may be reported from different channel measurement resource sets.

The RSRP corresponding to the beam index (for example, CRI or SSBRI) of each resource group is reported. For example, the RSRP of a specific group of CRIs or SSBRIs may be reported, and other RSRPs may be reported as differences from the RSRP of a specific group of CRIs or SSBRIs. The RSRP of the CRI or the SSBRI of the specific group may be the RSRP of the CRI or the SSBRI #1 of the first resource group.

The extended group-based beam reporting may be configured (or enabling/activating may be configured) by predetermined higher layer parameters (for example, groupBasedBeamReporting-r17). Alternatively, the extended group-based beam reporting may be determined to be valid when the higher layer parameter (for example, nrofReportedGroups-r17) for the number of groups to report is configured.

### (Event-Based Beam Report)

It has been studied that event-based (event-based) beam reporting is supported in future radio communication systems. The event-based beam reporting may be referred to as event-triggered beam reporting, and may mean UE-initiated beam reporting initiated by the UE.

### <Applicable Case>

The event-based beam reporting may apply, for example, in at least one of the following Cases 1 or 2:
- [Case 1]: L1-RSRP/SINR beam reporting including serving cell PCI/additional PCI (L1-RSRP/SINR beam reporting, including serving cell/additional PCI cell, for example, L1/L2 intra-cell mobility/intra-cell multi-TRP (M-TRP intra-cell)/Rel. 18 L1/L2 mobility with cell switching).
- [Case 2]: L1-RSRP/SINR beam reporting including only serving cell PCI.

When a specific event occurs (in the present disclosure, it may be read that a specific condition is satisfied/not satisfied), the UE may report a measurement result (for example, L1-RSRP/L1-SINR) to an NW (for example, a base station).

The specific event may be, for example, at least one of an event related to at least one of a serving cell and an additional cell and an event related to beam reporting including at least one of a PCI of the serving cell and a PCI of the additional cell.

### (Cell-Free)

Existing radio communication systems (for example, 5G NR) adopted a cellular scheme in which one cell is formed by one antenna/transmission and reception point (TRP) in principle. The area formed by the cell is fixed/static.

In addition, in an existing radio communication system (for example, Rel. 16 or later), distributed Multi Input Multi Output(Distributed MIMO, e.g., multi-TRPs using a plurality of TRPs) that forms a communication area by coverage of a plurality of antennas/TRPs has been introduced. In distributed MIMO, simultaneous communication using a plurality of antennas/TRPs and communication using one antenna/TRP can be performed.

By adopting distributed MIMO, a more preferable line-of-sight environment can be prepared, and performance related to MIMO can be improved.

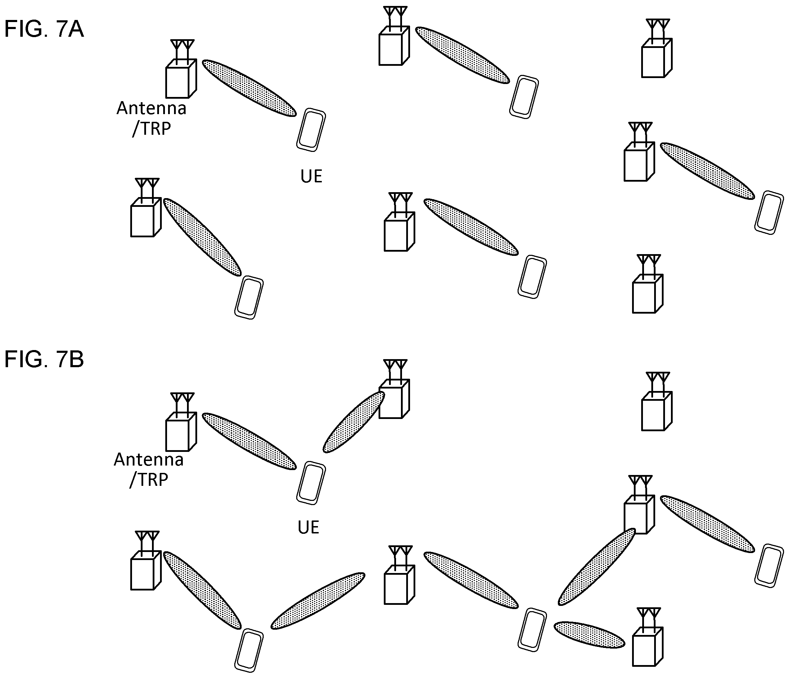

FIGS. 7A and 7B are diagrams illustrating an outline of MIMO. FIG. 7A illustrates an example of Co-located MIMO. In Co-located MIMO, one UE communicates with one antenna/TRP.

On the other hand, FIG. 7B illustrates an example of distributed MIMO. In distributed MIMO, one UE communicates with multiple coordinated antennas/TRPs.

In a future radio communication system (for example, Rel. 20 or later), introduction of cell-free communication has been studied for the purpose of further improving performance and improving energy consumption efficiency through reduction of interference between a plurality of antennas/TRPs, improvement of a line-of-sight environment corresponding to use of a high frequency, improvement of frequency use efficiency of the entire system, and application of equal and high quality communication to each user.

The cell-free may be referred to as cell-free massive MIMO (mMIMO) or large-scale distributed MIMO(distributed MIMO, D-MIMO). Cell-free uses coherent coordination of a large number of access points. Cell-free may include at least one of ultra-dense deployment, scalable cooperation, user-centric clustering, super-carrier aggregation, or analog fronthaul. The user plane for cell-free may perform scheduling more flexibly than existing scheduling. The control plane for cell-free may maintain some form of cell to facilitate signaling.

In the cell-free system, unlike a conventional cellular system, one area (which may be referred to as a cell/subcell or the like) may be formed by a plurality of antennas/TRPs. That is, the area may mean a cell that does not depend on the position of the antenna/TRP.

In the cell-free, the set of antennas/TRPs used for area formation may be changed according to the demand of the UE. For example, the set of the antennas/TRPs may be changed based on the number of UEs/the amount of traffic, communication purposes (for example, initial access/data communication/measurement/reporting, etc.), or the like, rather than coverage of the antennas/TRPs.

In other words, in cell-free, the coverage between multiple antennas/TRPs may overlap.

In the cell-free, a direction in which a synchronization signal (for example, it may be referred to as a synchronization signal block (SSB), a synchronization signal/physical broadcast channel (SS/PBCH) block, or the like.) is transmitted may be controlled in each antenna/TRP.

Further, in the cell-free, central unit (CU)/distributed unit (DU) may be virtualized for each antenna. Alternatively, each antenna may be managed only by the CU.

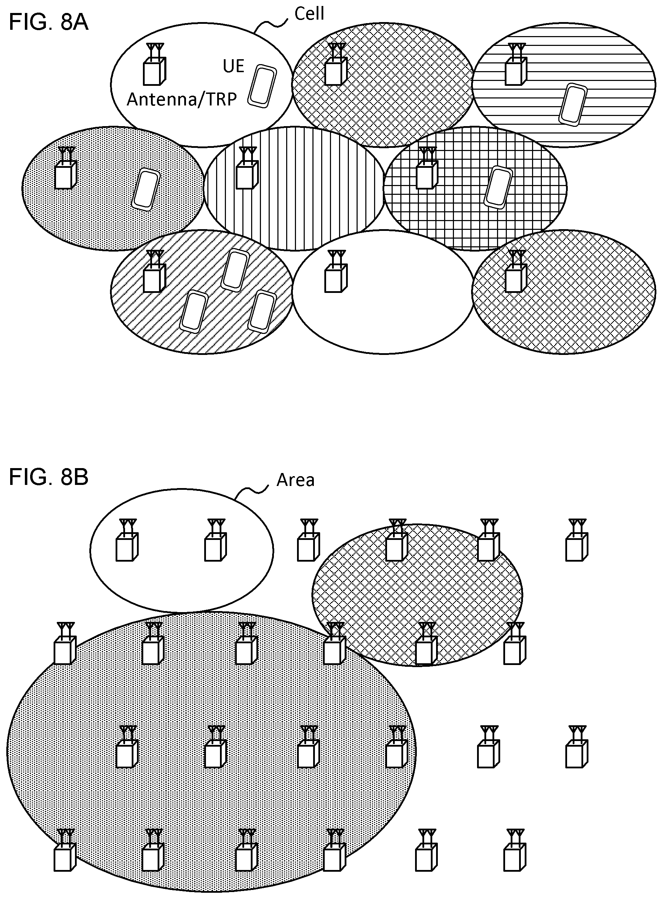

FIG. 8A is a diagram illustrating an outline of a cellular system; FIG. 8A illustrates a cell formed by each antenna/TRP, and the UE performs communication based on the cell.

On the other hand, FIG. 8B is a diagram illustrating an outline of the cell-free system. In the example illustrated in FIG. 8B, the installed antenna/TRP does not form a fixed/static cell in a cellular system. As illustrated in FIG. 8B, in a cell-free system, one or more antennas/TRPs form an area according to a condition. Therefore, in a cell-free system, each antenna/TRP may not correspond to an identical physical cell ID, and areas between multiple antennas/TRPs may overlap.

Cell-free may be realized, for example, by adjusting a set of antennas/TRPs controlled by a central control unit (for example, CU).

In a cell-free system, a first cell (for example, it may be referred to as a cell/super cell/macro cell/large cell, or the like.) whose physical range is fixed, such as a cell in a 5G NR system, and a second cell (for example, it may be referred to as a subcell/area/microcell/cell/small cell/second cell in the first cell, or the like.) whose physical range semi-statically/dynamically fluctuates based on a condition may be formed.

For example, to distinguish from the second cell, the first cell may be referred to as a super cell. When the super cell is composed of a plurality of second cells, the second cell may have a definition/operation/coverage similar to an existing cell in NR. For example, to distinguish from the first cell, the second cell may be referred to as a subcell. When the super cell or the cell is composed of a plurality of subcells, the subcell may have a definition/operation/coverage similar to an existing cell in NR.

The first cell may be a cell newly defined in a future radio communication system, or a definition of a cell in an existing radio communication system may be reused.

For the configuration of the first cell and the second cell, the following assumptions 1 and 2 are considered:
Assumption 1: The first cell includes a plurality of TRPs having one cell ID (physical cell ID (PCI)). A plurality of TRPs can perform transmission and reception in cooperation.
Assumption 2: The first cell is composed of a plurality of TRPs (or subcells) with different cell IDs. A plurality of TRPs/subcells can perform transmission and reception in cooperation.

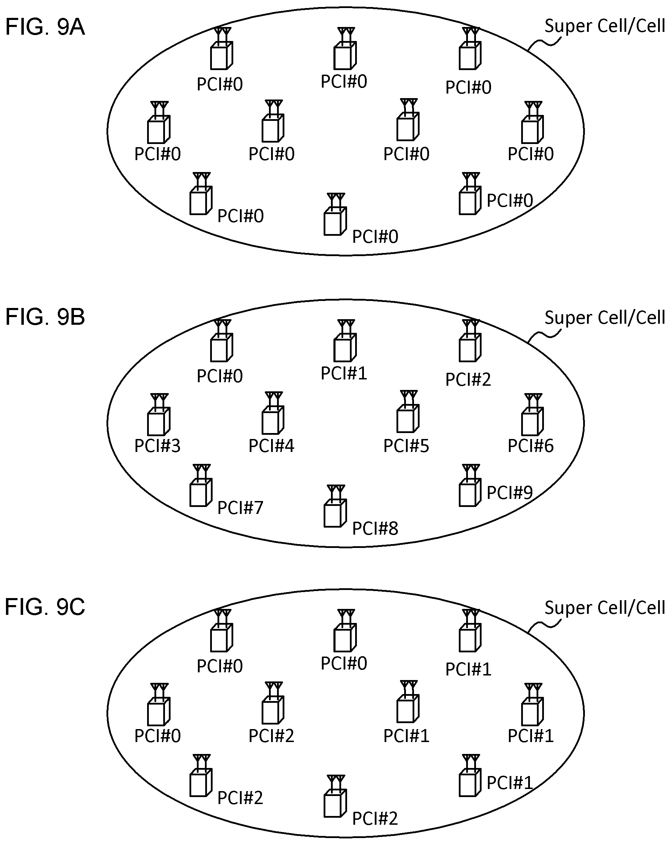

FIG. 9A is a diagram illustrating an example of an outline of assumption 1 of the cell-free configuration. In the example illustrated in FIG. 9A, each TRP included in the first cell (super cell/cell) has the same PCI (PCI#0). A plurality of TRPs can perform communication in cooperation with one UE.

FIG. 9B is a diagram illustrating an example of an outline of Assumption 2 of the cell-free configuration. In the example illustrated in FIG. 9B, each TRP included in the first cell (super cell/cell) has a different PCI (PCI#0 to PCI#9). A plurality of TRPs can perform communication in cooperation with one UE.

FIG. 9C is a diagram illustrating another example of an outline of Assumption 2 of the cell-free configuration. In the example illustrated in FIG. 9C, a PCI is allocated to each TRP included in the first cell (super cell/cell). In the example illustrated in FIG. 9C, unlike the example of FIG. 9B, the same PCI may correspond to multiple TRPs. A plurality of TRPs can perform communication in cooperation with one UE.

Transmission/reception with TRP/subcell coordination may be based on at least one of the following several schemes supported in NR:
- Transmission of a single TRP/subcell with dynamic TRP/subcell switching (single TRP transmission)
- Joint transmission (multi-TRP joint transmission) using a plurality of TRPs/subcells. The joint transmission may be based on single DCI or multiple DCI. The joint transmission may be non-coherent joint transmission (NCJT) or coherent joint transmission (CJT).

For cell-free, assuming ideal backhaul (backhaul) and tight coordination, in a joint transmission manner, CJT may be prioritized over NCJT, and single DCI based joint transmission may be prioritized over multiple DCI based joint transmission.

### (Analysis)

In the existing radio communication system (5G NR), when the application ("usage" of the higher layer parameter) related to the SRS is set to beam management, only one SRS resource in each of the plurality of SRS sets is transmitted in a specific time instance. On the other hand, multiple SRS resources in different SRS resource sets of an identical time domain operation (behavior) in an identical BWP may be transmitted simultaneously.

This is because one SRS resource set corresponds to one panel in the UE.

In a future radio communication system (for example, Rel. 20 or later), enhancement of DL beam management has been studied. In the beam management, based on an enhanced beam report, the NW/base station can recognize the best/selected TRP at the UE and the best/selected beam for each TRP.

Similarly, extension of UL beam management has also been studied in future radio communication systems. For non-reciprocity/partial-reciprocity scenarios (for example, a scenario in which only UL TRPs are used), the UL beam management procedure/operation is preferably performed so that the UE/base station can recognize/identify the best/selected UL TRPs and the best/selected UL beams per TRP.

In the existing radio communication system, when the application related to the SRS is set to the beam management and the spatial relationship/TCI state is not configured to the SRS, the UE may select a beam for each SRS resource according to the implementation of the UE. In addition, when the application related to the SRS is set in the beam management and the spatial relationship/TCI state is configured for the SRS, the UE may follow the beam indicated for each SRS resource.

However, there is not enough consideration on how the NW/base station recognizes the best TRP/second cell and the best beam per TRP/second cell.

In addition, in the case of cell-free MIMO, a scenario (for example, a carrier aggregation (CA) scenario) based on DL/UL beam reporting/measurement in a special cell (SpCell, e.g., primary cell (PCell)/primary secondary cell (PSCell)), the NW can obtain information related to a rough DL/UL beam of the SCell even in a deactivated secondary cell (SCell) based on implementation.

Therefore, in a future radio communication system, introduction/execution of beam management (high-speed beam management) in a deactivated SCell is considered in order to reduce a delay from activation of the SCell to data transmission in the SCell.

However, such a beam management method is not sufficiently studied.

If these studies are not sufficient, appropriate communication between the TRP/second cell and the UE cannot be performed, and improvement in communication throughput may be suppressed.

Therefore, the present inventors have conceived a method for solving the above problem.

Hereinafter, embodiments according to the present disclosure will be described in detail with reference to the drawings. The radio communication method according to each of the embodiments may be applied independently, or may be applied in combination with others.

In the present disclosure, "A/B" and "at least one of A or B" may be interchanged with each other. Furthermore, in the present disclosure, "A/B/C" may mean "at least one of A, B, and C".

In the present disclosure, notification, activation, deactivation, indication (or indicate), select, configure, update, determine, and the like may be interchanged with each other. In the present disclosure, support, control, can control, operate, can operate, and the like may be interchanged with each other.

In the present disclosure, radio resource control (RRC), an RRC parameter, an RRC message, a higher layer parameter, a field, an information element (IE), a setting, and the like may be interchanged with each other. In the present disclosure, a Medium Access Control control element (MAC control element (CE)), an update command, an activation/deactivation command, and the like may be interchanged with each other.

In the present disclosure, the higher layer signaling may be, for example, any one of Radio Resource Control (RRC) signaling, Medium Access Control (MAC) signaling, broadcast information, other messages (for example, a message from a core network such as a positioning protocol (for example, NR Positioning Protocol A (NRPPa)/LTE Positioning Protocol (LPP)) message), or the like, or a combination thereof.

In the present disclosure, the MAC signaling may use, for example, the MAC control element (MAC CE), a MAC protocol data unit (PDU), or the like. The broadcast information may be, for example, a master information block (MIB), a system information block (SIB), remaining minimum system information (RMSI), other system information (OSI), or the like.

In the present disclosure, the physical layer signaling may be, for example, downlink control information (DCI), uplink control information (UCI), or the like.

### (Radio Communication Method)

In the present disclosure, a cell whose physical range is fixed, a cell that is not changed, a first cell, a super cell, a cell, a macro cell, a large cell, and the like may be interchanged with each other.

In the present disclosure, a cell whose physical range semi-statically/dynamically is changed based on a condition, a cell to be changed, a second cell, a subcell, a cell, an area, a micro cell, a small cell, a second cell in a first cell, and the like may be interchanged with each other.

The first cell may include one or more second cells.

One second cell may be included in a plurality of first cells. The different first cells may share one second cell.

The different first cells may or may not overlap each other.

In the present disclosure, L1-RSRP, L1-SINR, L1-RSRQ, L3-RSRP, L3-SINR, L3-RSRQ, filtered/enhanced L1 measurement, and the like may be interchanged with each other.

### <First Embodiment>

A first embodiment relates to a condition of an SRS resource set/SRS resource.

The present embodiment may be applied in a cell-free configuration, or may be applied in a configuration other than the cell-free configuration.

The application of the SRS may be set to a specific application (for example, beam management/non-codebook/codebook/antenna switching).

A plurality of SRS resource sets may be configured in the UE.

One SRS resource set may correspond to one/a plurality of TRP/subcell/UE panels.

One or a plurality of conditions may be applied/considered to a plurality of SRS resource sets. The UE may assume/determine that one or a plurality of conditions are applied to a plurality of SRS resource sets.

The condition may be at least one of the following options 1-1 to 1-10.

### <<Option 1-1>>

The condition may be, for example, a condition related to a beam applied to a plurality of SRS resource sets/SRS resources.

When an SRS resource for a specific application (for example, beam management) with information regarding a beam (for example, a spatial relation/TCI state) is configured, QCL source RSs for a plurality of SRS resources in one SRS resource set may have an identical RS type.

The RS type may be, for example, at least one of only a synchronization signal (for example, SSB), only a CSI-RS, and only an SRS.

RS types of QCL source RSs for a plurality of SRS resources in different SRS resource sets may be separately determined.

For example, QCL source RSs for multiple SRS resources in different SRS resource sets may each have different RS types.

### <<Option 1-2>>

The condition may be, for example, a condition related to a physical cell ID (PCI) corresponding to a plurality of SRS resource sets/SRS resources.

A QCL source RS/associated RS for a plurality of SRS resources in one SRS resource set may be associated with the same PCI.

The PCIs associated with the QCL source RS/associated RS (associated RS) for a plurality of SRS resources in different SRS resource sets may be determined separately.

For example, the QCL source RS/associated RS for a plurality of SRS resources in different SRS resource sets may be associated with different PCIs.

### <<Option 1-3>>

The condition may be, for example, a condition related to a transmission/reception timing (for example, a timing advance) corresponding to a plurality of SRS resource sets/SRS resources.

The SRS resources in one SRS resource set may be associated with an identical timing advance (TA)/TA group (TAG).

TA/TAGs associated with SRS resources in different SRS resource sets may be separately determined.

For example, the SRS resources in the different SRS resource sets may be associated with different TA/TAGs.

### <<Option 1-4>>

The condition may be, for example, a condition related to a transmission/reception timing (for example, a timing advance) corresponding to a plurality of SRS resource sets/SRS resources.

For each SRS resource set, an offset (for example, n-TimingAdvanceOffset) for the timing advance may be configured/associated/supported.

### <<Option 1-5>>

The condition may be, for example, a condition related to a transmission/reception timing (for example, a DL reference timing) corresponding to a plurality of SRS resource sets/SRS resources.

For each SRS resource set, the DL reference timing may be configured/associated/supported.

### <<Option 1-6>>

The condition may be, for example, a condition related to transmission power control applied to a plurality of SRS resource sets/SRS resources.

For each set of SRS resources, at least one of a path loss RS and a transmission power control (TPC) parameter (for example, a parameter related to a p0/α/PC adjustment state) may be configured/associated/supported.

### <<Option 1-7>>

The condition may be, for example, a condition related to a specific ID corresponding to a plurality of SRS resource sets/SRS resources.

The SRS resource in one SRS resource set may be associated with at least one of an identical channel measurement resource (CMR) group ID, a TRP/subcell ID, and a UE panel ID.

At least one of a CMR group ID, a TRP subcell ID, and a UE panel ID associated with the SRS resources in different SRS resource sets may be separately determined.

For example, the SRS resources in the different SRS resource sets may be associated with at least one of different channel measurement resource (CMR) group IDs, TRP/subcell IDs, and UE panel IDs.

If a capability for simultaneous transmission of a particular panel is reported, the UE may perform simultaneous transmission for the SRS resource set associated with a corresponding panel. Otherwise, the UE may perform time division multiplexing and transmission on the SRS resource set associated with the corresponding panel.

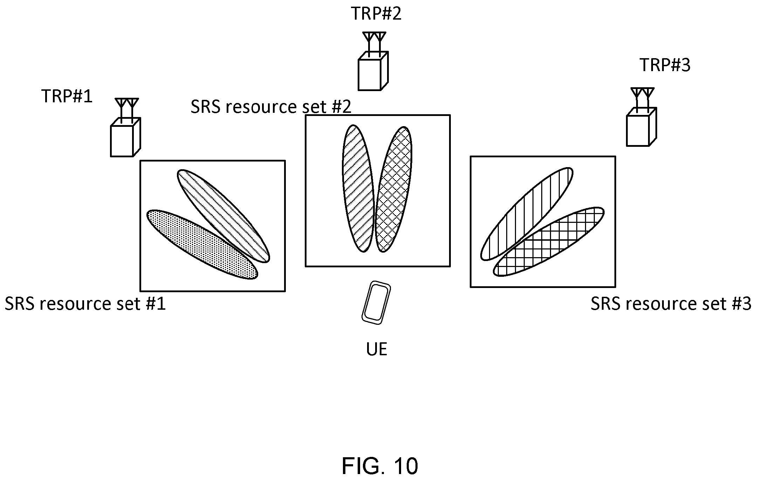

FIG. 10 is a diagram illustrating an example of allocation of an SRS resource set/SRS resource according to Option 1-7. In the example illustrated in FIG. 10, SRS resource sets #1 to #3 are allocated to the UE. In the example illustrated in FIG. 10, the SRS resources in one SRS resource set are associated with an identical TRP (TRP ID) (FIG. 10 illustrates an example in which one SRS resource set includes two SRS resources). In the example illustrated in FIG. 10, the SRS resources in different SRS resource sets are associated with different TRPs (TRP IDs).

### <<Option 1-8>>

The condition may be, for example, a condition related to a beam (a beam based on repetition) applied to a plurality of SRS resource sets/SRS resources.

For each SRS resource set, an NW/base station may indicate the same/different beams per set by configuring "on" or "off" for repetition.

### <<Option 1-9>>

The condition may be, for example, a condition related to a plurality of SRS resource sets/SRS resources (for example, overlapping of SRS resources).

A plurality of SRS resources in different SRS resource sets may not overlap each other.

The UE may assume that a plurality of SRS resources in different SRS resource sets do not overlap each other.

### <<Option 1-10>>

The condition may be, for example, a condition related to a plurality of SRS resource sets/SRS resources (for example, simultaneous transmission of SRS resources).

It may be assumed that the UE is able to simultaneously transmit a plurality of SRS resources from a certain maximum number (for example, X) of SRS resource sets based on reporting of a UE capability.

One SRS resource in each SRS resource set may be transmitted in a specific time instance.

The specific maximum number may be, for example, a number (for example, 32 and 64) larger than the maximum number of existing SRS resource sets (for example, 16). With this configuration, a larger number of SRS resource sets can be supported/configured.

The maximum quantity of SRS resource sets may be determined based on UE capability information.

The maximum number of SRS resources per SRS resource set may be determined based on UE capability information.

### <<Variation 1 of First Embodiment>>

One SRS resource set (each SRS resource set) may be associated with one PCI, and the one SRS resource set may be associated with a plurality of TRPs.

A plurality of subsets may be configured for one SRS resource set (each SRS resource set). One subset (each subset) of the plurality of subsets may be associated with one TRP (TRP ID)/TA/TAG.

For example, the above option 1-1/1-3/1-4/1-5/1-6/1-7/1-8/1-9 may be applied to each subset of the plurality of subsets.

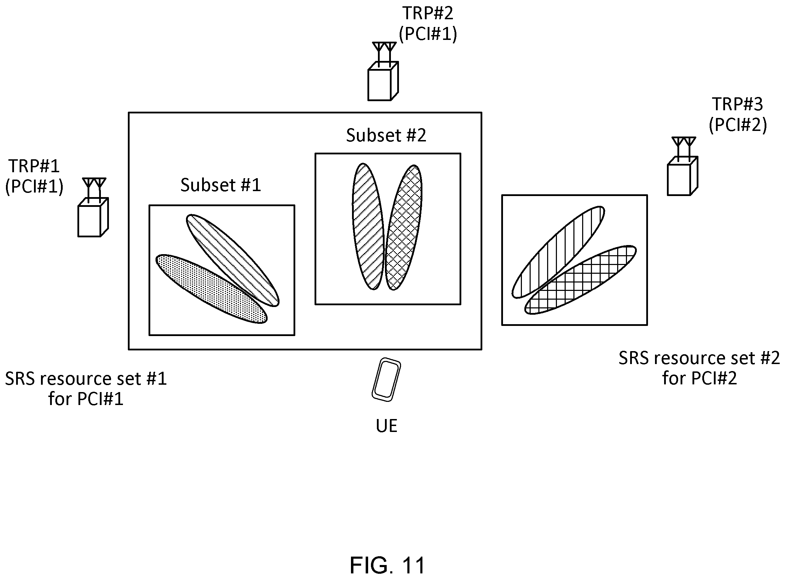

FIG. 11 is a diagram illustrating an example of allocation of SRS resource sets/SRS resources according to Variation 1 of the first embodiment. In the example illustrated in FIG. 11, SRS resource sets #1 and #2 are allocated to the UE. In the example illustrated in FIG. 11, SRS resource set #1 is associated with PCI #1 and SRS resource set #2 is associated with PCI #2.

In the example illustrated in FIG. 11, subsets #1 and #2 are configured in SRS resource set #1. Subset #1 (SRS resources included in subset #1) and subset #2 (SRS resources included in subset #2) are associated with different TRPs (TRP IDs).

### <<Variation 2 of First Embodiment>>

One SRS resource set (each SRS resource set) may be associated with a plurality of specific TRPs.

The plurality of specific TRPs may be, for example, a plurality of co-located TRPs (a plurality of TRPs having the same TA/TAG/TA offset/DL reference timing). In other words, the TA/TAG/TA offset/DL reference timing may be different for each SRS resource set.

A plurality of subsets may be configured for one SRS resource set (each SRS resource set). One subset (each subset) of the plurality of subsets may be associated with one TRP (TRP ID)/PCI/path loss RS.

For example, the above option 1-1/1-2/1-6/1-7/1-8/1-9 may be applied to each subset of the plurality of subsets.

With such a configuration, different restrictions/conditions can be applied for each SRS resource set, and the UE/NW can perform handling/operations according to various situations.

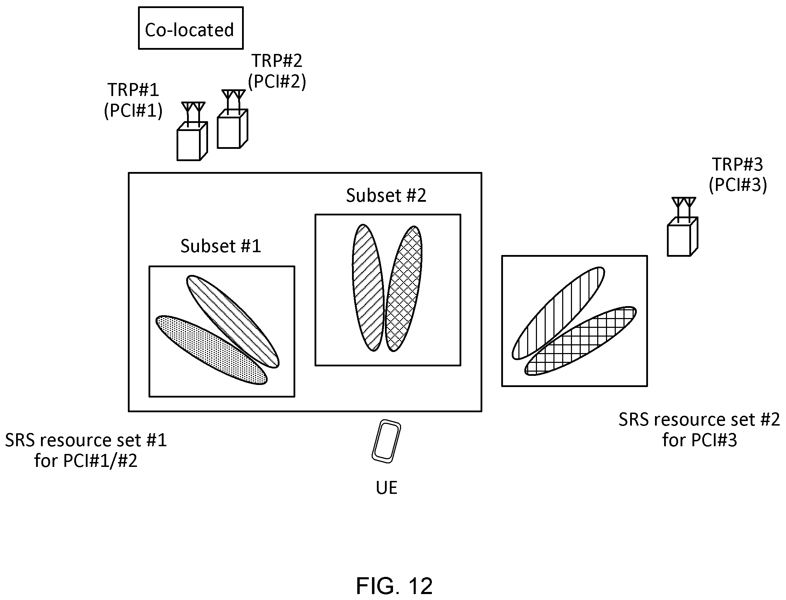

FIG. 12 is a diagram illustrating an example of allocation of SRS resource sets/SRS resources according to Variation 2 of the first embodiment. In the example illustrated in FIG. 12, SRS resource sets #1 and #2 are allocated to the UE. In the example illustrated in FIG. 12, SRS resource set #1 is associated with PCI #1 and PCI #2, and SRS resource set #2 is associated with PCI #3. A TRP corresponding to PCI #1 and a TRP corresponding to PCI #2 are provided side by side.

In the example illustrated in FIG. 12, subsets #1 and #2 are configured in SRS resource set #1. Subset #1 (SRS resources included in subset #1) and subset #2 (SRS resources included in subset #2) are associated with different TRPs (TRP IDs).

In the first embodiment, in the case of different SRS applications, at least one of the condition to be applied, the maximum number of SRS resource sets, and the maximum number of SRS resources for each SRS resource set may be separately (differently) determined/configured.

As described above, according to the first embodiment, the condition related to the SRS resource set/SRS resource can be appropriately defined, and efficient beam measurement/reporting can be performed.

### <Second Embodiment>

A second embodiment relates to UL transmission (for example, SRS transmission) for a deactivated SCell.

For a UE, a specific new RRC parameter may be configured. A new RRC parameter may be, for example, a parameter related to UL transmission (for example, a trigger of SRS (for example, aperiodic SRS) transmission) for a deactivated SCell.

The UE may support triggering of SRS (for example, aperiodic SRS) transmission for deactivated SCells.

A configuration of an SRS resource set of the SRS (for example, aperiodic SRS) for the deactivated SCell may be determined according to the first embodiment.

A carrier indicator field (CIF) may be included in a specific DCI format (for example, a DCI format for scheduling DL channels (for example, DCI formats 1_0/1_1/1_2)/DCI formats for scheduling UL channels (for example, DCI formats 0_0/0_1/0_2)).

When a specific new RRC parameter is configured, the UE may determine/assume that a quantity of bits of the carrier indicator field has a quantity of bits (for example, 4 or 5 bits) greater than a quantity of bits (for example, 3 bits) in an existing 5G NR.

For example, a range of possible values of an RRC parameter (for example, cif-InSchedulingCell) indicating a CIF value used in a scheduling cell may be extended from an existing range (for example, 1 to 7). The extended range may be, for example, 1 to 15 or 1 to 31.

When the new RRC parameter is configured for a UE, the CIF indicated for the SCell may be activated or deactivated.

An SRS offset field may be included in a specific DCI format (for example, DCI format 0_0/0_1/0_2/1_0/1_1/1_2/2_1/2_2).

When a CIF indicated for an SCell is deactivated, the UE may determine/assume that a specific DCI format includes a field for an additional SRS offset.

A field (value) related to the additional offset may be defined in advance in the specification, may be configured/notified to the UE using the RRC/MAC CE, may be determined based on a report of UE capability information, or may be determined based on a combination thereof.

When a specific new RRC parameter is configured and a trigger configuration for SRS transmission of a first type (for example, Type A) is configured, an RRC parameter (for example, cc-IndexInOneCC-Set) value for indicating a CC index in one component carrier (CC) set may be extended from an existing range (for example, 0 to 7). The extended range may be, for example, 0 to 15 or 0 to 31.

When a specific new RRC parameter is configured and a trigger configuration for SRS transmission of a second type (for example, Type B) is configured, a new carrier indicator field for indicating a cell ID of an SRS request field may be added in a DCI format (for example, a DCI format (DCI format 2_3) used for transmitting a group of TPC commands for SRS transmission) for one or more UEs.

When the UE transmits the SRS in the deactivated SCell, an existing operation related to collision processing between different CCs may be applied. For example, when the UE transmits the SRS in the deactivated SCell, it may be determined/assumed that other UL transmissions are not performed in other cells.

For example, existing UE operations may be applied for different UE capabilities (for example, UE capabilities related to simultaneous transmission and reception for inter-band CA (for example, between TDD and TDD or between TDD and FDD) or UE capabilities related to a half-duplex UE operation in TDD with the same subcarrier spacing).

According to the second embodiment, the SRS transmission for the deactivated SCell can be appropriately performed.

### <Third Embodiment>

A third embodiment relates to CSI reporting for a deactivated SCell.

For a UE, a specific new RRC parameter may be configured. The new RRC parameter may be, for example, a parameter related to UL transmission (trigger for CSI reporting (for example, aperiodic CSI reporting)) for a deactivated SCell.

The specific new RRC parameter may be a parameter common to the new RRC parameters in the second embodiment, or may be a parameter different from the new RRC parameters in the second embodiment.

The configuration of CMR measurement/reporting for CSI reporting (aperiodic CSI reporting) for deactivated SCells may follow at least one method to be detailed below.

A carrier indicator field (CIF) may be included in a specific DCI format (DCI format 1_0/1_1/1_2/0_0/0_1/0_2/2_1/2_2).

When a specific new RRC parameter is configured, the UE may determine/assume that a quantity of bits of the carrier indicator field has a quantity of bits (for example, 4 or 5 bits) greater than a quantity of bits (for example, 3 bits) in an existing 5G NR.

For example, a range of possible values of an RRC parameter (for example, cif-InSchedulingCell) indicating a CIF value used in a scheduling cell may be extended from an existing range (for example, 1 to 7). The extended range may be, for example, 1 to 15 or 1 to 31.

When a trigger of aperiodic SRS and a trigger of aperiodic CSI reporting are supported/configured, the UE may determine to use a common CIF included in the DCI. In other words, when the trigger of the aperiodic SRS and the trigger of the aperiodic CSI reporting are supported/configured, the CIF included in the DCI may be a common field for the trigger of the aperiodic SRS and the trigger of the aperiodic CSI reporting.

### <<Configuration Example 1 of CMR measurement/reporting>>

Hereinafter, configuration of CMR measurement/reporting (in particular, non-group-based beam reporting) will be described.

### [Example 1.1]

When non-group-based beam reporting is configured, a plurality of groups (for example, X CMR groups) of a plurality of CMRs (SSB/CSI-RS) may be configured for the purpose of CSI resource configuration for channel measurement for L1-RSRP/L1-SINR-based beam measurement/reporting. Each CMR group may include the same number of CMRs. For example, each CMR group may include Y CMRs (Y CMRs may be configured for each CMR group). The UE may select/report M CMR groups in which each CMR group includes N CMRs. In other words, the UE may select/report M×N CMRs among the plurality of CMRs in M CMR groups.

The X/Y/M/N may be configured by RRC signaling or may be defined by a specification. A maximum value of the X/Y/M/N may be defined by a specification or may be reported to a base station by UE capability information.

One CMR group may mean one TRP/subcell. In other words, the CMR group, the TRP, and the subcell may be interchanged with each other. The base station may configure beam measurement for multiple TRPs/subcells (X TRPs/subcells) in which each TRP/subcell has a plurality of beams (Y beams). The UE may select/report best N beams for each of the best M TRPs/subcells.

In the configuration of the CMR, a CMR group ID may be explicitly configured. In this case, the CMR group ID may be associated with an ID of a corresponding TRP/subcell.

In the configuration of the CMR, the CMR group ID may not be explicitly configured. In this case, the CMR group may be identified by the ID of the corresponding TRP/subcell.

The CMRs included in different CMR groups may be simultaneously transmitted via a network.

According to Example 1.1 described above, the UE can appropriately select/report the CMRs.

### [Example 1.2]

When non-group-based beam reporting is configured, a plurality of groups (for example, X CMR groups) of a plurality of CMRs (SSB/CSI-RS) may be configured for the purpose of CSI resource configuration for channel measurement for L1-RSRP/L1-SINR-based beam measurement/reporting. Each CMR group may include a different number of CMRs. A maximum number of CMRs configured for each CMR group may be defined by a specification or may be determined based on a UE capability. A maximum number of CMRs configured across a plurality of/all CMR groups may be defined by a specification or may be determined based on a UE capability. The UE may select/report K CMRs among all the configured CMR groups (in other words, across all the configured CMR groups). A maximum number of reported CMRs for each CMR group may be defined by a specification, may be configured by RRC signaling, or may be determined based on a UE capability. The maximum number of CMRs reported across a plurality of/all CMR groups may be defined by a specification, may be configured by RRC signaling, or may be determined based on a UE capability.

The X/K may be configured by RRC signaling or may be defined by a specification. A maximum value of X/K may be defined by a specification or may be reported to a base station by UE capability information.

One CMR group may mean one TRP. In other words, the CMR group and the TRP may be interchanged with each other. When a quantity of configured beams per TRP is different, the base station may configure only a sum of reported CMRs for a reporting configuration.

In the configuration of the CMR, a CMR group ID may be explicitly configured. In this case, the CMR group ID may be associated with an ID of a corresponding TRP.

In the configuration of the CMR, the CMR group ID may not be explicitly configured. In this case, the CMR group may be identified by the ID of the corresponding TRP.

According to Example 1.2 described above, the UE can appropriately select/report the CMR.

### [Example 1.3A]

When non-group-based beam reporting is configured, a plurality of groups (for example, X CMR groups) of a plurality of CMRs (SSB/CSI-RS) may be configured for the purpose of CSI resource configuration for channel measurement for L1-RSRP/L1-SINR-based beam measurement/reporting. Each CMR group may include the same number of CMRs. For example, Y CMRs may be configured for each CMR group (each CMR group may include Y CMRs). The UE may select/report K CMRs among all the configured CMR groups (in other words, across all the configured CMR groups). A maximum number of reported CMRs for each CMR group may be defined by a specification, may be configured by RRC signaling, or may be determined based on a UE capability. A maximum number of reported CMRs (a maximum value of K) across a plurality of/all CMR groups may be defined by a specification, may be configured by RRC signaling, or may be determined based on a UE capability.

The X/Y/K may be configured by RRC signaling or may be defined by a specification. The maximum value of X/Y/K may be defined by a specification or may be reported to a base station with UE capability information.

According to Example 1.3A described above, the UE can appropriately select/report the CMRs.

### [Example 1.3B]

When non-group-based beam reporting is configured, a plurality of groups (for example, X CMR groups) of a plurality of CMRs (SSB/CSI-RS) may be configured for the purpose of CSI resource configuration for channel measurement for L1-RSRP/L1-SINR-based beam measurement/reporting. Each CMR group may include a different number of CMRs. The UE may select/report M CMR groups in which each CMR group includes N CMRs. In other words, the UE may select/report M×N CMRs among the plurality of CMRs in M CMR groups. A maximum number of CMRs (N) configured for each CMR group may be defined by a specification or may be determined based on a UE capability. A maximum number of CMRs (M×N) configured across a plurality of/all CMR groups may be defined by a specification or may be determined based on a UE capability. N may be equal to or less than the number of CMRs configured in a CMR group in which the number of configured CMRs is the smallest among the configured CMR groups.

The X/M/N may be configured by RRC signaling or may be defined by a specification. A maximum value of the X/M/N may be defined by a specification or may be reported to a base station with UE capability information.

According to Example 1.3B described above, the UE can appropriately select/report the CMRs.

### [Example 1.4]

A restriction may be provided for at least one of the CMRs configured for each CMR group (in other words, within the same CMR group) and the CMRs configured for different CMR groups. The restriction may depend on at least one of reporting of UE capability and network configuration.

Restrictions may be provided as to the type of reference signal. The restriction may be either option 1 or 2 below.
- Option 1: Types of reference signals for a plurality of CMRs in all CMR groups are the same.
- Option 2: Types of reference signals for the plurality of CMRs in one CMR group are the same, and types of reference signals for the plurality of CMRs in different CMR groups are the same or different.

For Option 1, for example, in one reporting configuration, only SSBs or only CSI-RSs may be used as reference signals for a plurality of CMRs in all CMR groups.

For Option 2, for example, only one of SSB or CSI-RS may be used as a reference signal for a plurality of CMRs in the first CMR group, and in this case, only one of SSB or CSI-RS may be used as a reference signal for a plurality of CMRs in the second CMR group.

A restriction on a physical cell identifier (PCI) may be provided. The restriction may be at least one of the following Options 1 to 3.
- Option 1: a plurality of CMRs in one CMR group are associated with an identical PCI.
- Option 2: for an intra-cell, a plurality of CMRs in different CMR groups are associated with an identical PCI.
- Option 3: for inter-cell, a plurality of CMRs in different CMR groups are associated with an identical or different PCIs.

A restriction on a QCL source RS may be provided. When a plurality of CSI-RSs are configured as a plurality of CMRs, QCL source RSs of the plurality of CMRs in one CMR group may be limited to one same SSB.

A restriction on a timing advance (TA)/timing advance group (TAG) may be provided. The restriction may be either Option 1 or 2 below.
- Option 1: a plurality of CMRs (alternatively, a plurality of TCI states associated with a plurality of CMRs in one CMR group) in one CMR group are associated with the identical TA/TAG. A plurality of CMRs (alternatively, a plurality of TCI states associated with a plurality of CMRs in different CMR groups) of different CMR groups are associated with different TA/TAGs.
- Option 2: all CMRs (alternatively, a plurality of TCI states associated with a plurality of CMRs in different CMR groups) of different CMR groups are associated with the identical TA/TAG.

A restriction on an offset value (for example, n-TimingAdvanceOffset) of TA may be provided. The restriction may be at least one of the following Options 1 to 3.
- Option 1: an offset value of one TA is configured for each CMR group. In this case, the offset value of TA may be the same or different among the plurality of CMR groups.
- Option 2: for all the CMR groups, an offset value of one TA is configured. In this case, the offset value of TA is the same/common among all CMR groups.
- Option 3: in the case of an inter-cell, one TA offset value is configured for each PCI and/or each TAG.

A restriction on the DL reference timing may be provided. The restriction may be at least one of the following Options 1 to 3.
- Option 1: one DL reference timing is configured/supported for each CMR group. In this case, the DL reference timing may be the same or different among a plurality of CMR groups.
- Option 2: one DL reference timing is configured/supported for all the CMR groups. In this case, the DL reference timing is the same/common among all CMR groups.
- Option 3: in the case of an inter-cell, one DL reference timing is configured/supported for each PCI and/or each TAG.

A restriction on a DL path loss reference signal (PL-RS) may be provided. The UE may not expect more than one SSB/CSI-RS to be configured as PL-RS from one CMR group.

A restriction on a DL radio link monitoring reference signal (radio link monitoring reference signal (RLM-RS)) may be provided. The UE may not expect more than one SSB/CSI-RS from one CMR group to be configured as an

### RLM-RS.

A restriction on a DL beam failure detection reference signal (beam failure detection reference signal (BFD-RS)) may be provided. The UE may not expect more than one SSB/CSI-RS from one CMR group to be configured as BFD-RS.

### [Example 1.5]

When the L1-SINR is configured as a report quantity, the configuration of the ZP-IMR may be at least one of the following Options 1.5-1 to 1.5-3.
- Option 1.5-1: ZP-IMR and CMR are mapped one-to-one.
- Option 1.5-2: one commonly configured ZP-IMR is configured for all the CMRs.
- Option 1.5-3: one commonly configured ZP-IMR is configured for each CMR group.

In the above Option 1.5-1, one ZP-IMR may be configured for each CMR.

In the above Option 1.5-3, one commonly configured ZP-IMR may be applied to a plurality of CMRs in one CMR group, and the same/different ZP-IMRs may be respectively applied to a plurality of CMRs in different CMR groups.

Whether L1-SINR measurement/reporting is supported and whether the above Option 1.5-1/1.5-2/1.5-3 is supported may depend on at least one of a UE capability and configuration by a network.

When the L1-SINR is configured as a report quantity, configuration of the NZP-IMR may be at least one of the following Options 2.5-1 to 2.5-3.
- Option 2.5-1: NZP-IMR and CMR, or NZP-IMR and ZP-IMR are mapped one-to-one.
- Option 2.5-2: one commonly configured NZP-IMR is configured for all the CMRs or between the NZP-IMR and the ZP-IMR.
- Option 2.5-3: one commonly configured NZP-IMR is configured for each CMR group.

In the above Option 2.5-1, one NZP-IMR may be configured for each CMR.

In the above Option 2.5-3, one commonly configured NZP-IMR may be applied to a plurality of CMRs in one CMR group, and the same/different NZP-IMRs may be respectively applied to a plurality of CMRs in different CMR groups.

Whether the configuration of the NZP-IMR for the L1-SINR is supported and whether the above Option 2.5-1/2.5-2/2.5-3 is supported may depend on at least one of a UE capability and configuration by a network.

### [Example 1.6]

The UE may report at least one of a beam index (CRI/SSBRI) indication, a CMR group ID indication, and a value of L1-RSRP/L1-SINR per beam to a base station in one CSI reporting. The CSI reporting may be generated according to either of the following Options 1.6-1 or 1.6 - 2.

### [[Option 1.6-1]]

The CMRs configured across all the CMR groups may be indexed. One beam index corresponding to one CMR may be indicated by using ceil(log₂(MAX_allgroup)) bits. In the present disclosure, MAX_allgroup may mean a total number of CMRs across the CMR groups. In the present disclosure, ceil(A) may mean a ceiling function of A. In the present disclosure, log₂(B), ceil(log₂(B)), and the like may be read as each other. ceil(log₂(MAX_allgroup)) means the number of bits of one beam index corresponding to one CMR when all the CMRs are indexed across all the CMR groups.

The UE may generate CSI reporting using all the beam indexes corresponding to all the selected/reported CMRs.

For example, the UE may report M×N beam indexes corresponding to M×N CMRs using M×N×ceil(log₂(MAX_allgroup)) bits in Examples 1.1 and 1.3B.

For example, the UE may report K beam indexes corresponding to K CMRs using K×ceil(log₂(MAX_allgroup)) bits in Examples 1.2 and 1.3A.

### [[Option 1.6-2]]

The CMRs configured for each CMR group may be indexed. One beam index corresponding to one CMR in the CMR group may be indicated using ceil(log₂(MAX_pergroup)) bits. In the present disclosure, MAX_pergroup may mean the number of CMRs in a certain CMR group. One CMR group ID may be represented using ceil(log₂(total number of CMR groups)) bits. In this case, CSI reporting may be generated according to the following Option 1.6-2A or 1.6-2B.

The UE may generate CSI reporting for each CMR group using the beam index corresponding to the selected/reported CMR and the CMR group ID including the CMR (Option 1.6-2A).

The UE may generate the CSI reporting for each beam index and for each CMR group using the beam index corresponding to the selected/reported CMR and the ID of the CMR group including the CMR (Option 1.6-2B).

In order to quantize an L1-RSRP/L1-SINR value for each beam, the following Option 2-A or 2-B may be used. In the present disclosure, strong (stronger), large (larger), high (higher), good (better), and the like may be read as each other. In the present disclosure, the strongest, the largest, the highest, the best, and the like may be interchanged with each other.

### [Option 2-A]

A strongest value among all the measured values (L1-RSRP/L1-SINR values) for all the CMR groups may be quantized by 7 bits (or another bit size with a high quantization resolution), and the remaining values may be differentially quantized by 4 bits (or another bit size with a low quantization resolution).

In CSI reporting, a beam with the largest L1-RSRP/L1-SINR value among all the CMRs may be mapped/placed before other beams.

### [Option 2-B]

A strongest value among all the measured values (L1-RSRP/L1-SINR values) for one CMR group may be quantized by 7 bits (or another bit size with a high quantization resolution), and the remaining values in the CMR group may be differentially quantized by 4 bits (or another bit size with a low quantization resolution).

In CSI reporting, a beam having a largest L1-RSRP/L1-SINR value among the CMRs for each CMR group may be mapped/placed before other beams included in the same CMR group.

In the CSI reporting, the L1-RSRP/L1-SINR value may be mapped/placed after the corresponding beam index. In this case, any of the following Options 3-A to 3-C may be used.

### [Option 3-A]

An L1-RSRP/L1-SINR value for each beam may be mapped/placed immediately after the corresponding beam index.

### [Option 3-B]

An L1-RSRP/L1-SINR value for a beam for each CMR group may be mapped/placed after the beam index for each CMR group.

### [Option 3-C]

L1-RSRP/L1-SINR values for all the beams may be mapped/placed after all the beam indexes.

According to Example 1.6 described above, a size and mapping of CSI reporting can be appropriately determined.

### [Variation 1]

At least one of the number of CMR groups (M), the number of CMRs of each CMR group (N), and the number of CMRs across CMR groups (K) may not be configured by a network. In other words, the UE may determine at least one of M, N, and K.

At least one of the maximum number of CMR groups (M'), the maximum number of CMRs per CMR group (N'), and the maximum number of CMRs across CMR groups (K') may be configured by a network. The UE may determine at least one of M satisfying M ≤ M', N satisfying N ≤ N', and K satisfying K ≤ K'.

The size of the CSI reporting may be variable. In order for the network and the UE to have common knowledge about the content of the CSI reporting, the following extensions may be performed:
- CSI reporting of two parts is supported, the first part (CSI Part 1) has a fixed size and represents interpretation and a size of the second part (CSI Part 2).

For example, the UE may report, in the first part, the number of beams reported using ceil(log₂(MAX_allgroup)) bits or ceil(log₂(K')) bits. The size and content of the second part may be determined by the first part. In the second part, the UE may report at least one of a beam index (CRI/SSBRI) indication, a CMR group ID indication, and a value of L1-RSRP/L1-SINR for each beam according to Example 1.6.

For example, in the first part, the UE may report the number of CMR groups using ceil(log₂(number of CMR groups)) bits or ceil(log₂(M')) bits. In Part 1, the UE may report the number of CMRs for each CMR group using ceil(log₂(number of CMRs for each CMR group)) bits or ceil(log₂(N')) bits. The size and content of the second part may be determined by the first part. In the second part, the UE may report at least one of a beam index (CRI/SSBRI) indication, a CMR group ID indication, and a value of L1-RSRP/L1-SINR for each beam according to Example 1.6.

The MAC CE may activate/indicate/update at least one of the following based on the RRC configuration.
- one or more CMR groups for beam measurement
- one or more PCIs of one or more CMR groups for beam measurement
- the number of selected/reported CMR groups (M)/number of selected/reported CMRs of each CMR group (N)/Number of CMRs selected/reported across the CMR groups (K)
- configuration of ZP-IMR/NZP-IMR
- one or more restrictions according to Example 1.4

The MAC CE may include a CMR group ID/a TRP ID/a subcell ID.

When event-based beam reporting/updating is configured, a plurality of beams (alternatively, a plurality of beams associated with a plurality of TCI states) reported by the UE may be applied to a plurality of channels/RSs in the configured or defined corresponding DL/UL associated with the corresponding CMR group.

In order to support the above application, there may be a restriction that up to one beam is reported for each CMR group. Alternatively, if a plurality of beams are reported for each group, a specific rule may be used to select a beam to be applied to the channels/RSs for the corresponding CMR group. The rule may be, for example, a rule in which the first beam is used among the plurality of beams or a beam having a lower/higher ID is used.

For each TRP/CMR group, RLM-RS/BFD-RS/PL-RS may be updated as a reporting beam for the corresponding CMR group.

According to the first configuration example of CMR measurement/reporting described above, non-group-based beam reporting can be appropriately controlled.

### <<Configuration Example 2 of CMR measurement/reporting>>

Hereinafter, configuration of CMR measurement/reporting (in particular, a group-based beam reporting) will be described.

### [Example 2.1]

When a plurality of groups (for example, X CMR groups) of a plurality of CMRs (SSB/CSI-RS) are configured, group-based beam reporting may be supported/configured. Each CMR group may include the same number of CMRs (for example, Y CMRs), or each CMR group may include a different number of CMRs. The UE may select/report P joint reporting groups.

Each joint reporting group includes a plurality of CMR groups, and may include Q (where Q satisfies Q≤X) CMRs across the plurality of CMR groups.

In each joint reporting group, the number of CMRs selected/reported from one CMR group may be up to one.

The UE may simultaneously receive CMRs in one joint reporting group. The network may simultaneously transmit CMRs in different CMR groups (the network may simultaneously transmit RSs in a plurality of CMRs included in a plurality of CMR groups).

The X/Y/P/Q may be configured by RRC signaling or may be defined by a specification. A maximum value of the X/Y/P/Q may be defined by a specification or may be reported to a base station with UE capability information.

The UE may report capability information representing support for group-based beam reporting for the plurality of CMR groups.

In the configuration of the CMR, a CMR group ID may be explicitly configured. In this case, the CMR group ID may be associated with an ID of a corresponding TRP/subcell.

In the configuration of the CMR, the CMR group ID may not be explicitly configured. In this case, the CMR group may be identified by the ID of the corresponding TRP/subcell.

As a restriction in the configuration of the CMR, the following Option 1 or 2 may be provided.
- Option 1: one CMR may be selected/reported in only one joint reporting group. In other words, the same CMRs may not be selected/reported between different joint reporting groups.
- Option 2: the same CMR may be selected/reported between different joint reporting groups.

According to Example 2.1 described above, the UE can appropriately select/report the CMRs.

### [Example 2.2]

When a plurality of groups (for example, X CMR groups) of a plurality of CMRs (SSB/CSI-RS) are configured, group-based beam reporting may be supported/configured. Each CMR group may include the same number of CMRs (for example, Y CMRs), or each CMR group may include a different number of CMRs. The UE may select/report P₁ first joint reporting groups, P₂ second joint reporting groups, P₃ third joint reporting groups, or the like.

The number of selected/reported CMRs may be determined for each joint reporting group. For example, the number of CMRs in one first joint reporting group may be Q₁, the number of CMRs in one second joint reporting group may be Q₂, or the number of CMRs in one third joint reporting group may be Q₃.

In each joint reporting group, the number of CMRs selected/reported from one CMR group may be up to one.

The UE may simultaneously receive CMRs in one joint reporting group. A network may simultaneously transmit the CMRs in different CMR groups.

The X/Y/P₁/Q₁/P₂/Q₂/P₃/Q₃ or the like may be configured by RRC signaling or may be defined by a specification. A maximum value such as X/Y/P₁/Q₁/P₂/Q₂/P₃/Q₃ may be defined by a specification or may be reported to a base station with UE capability information.

As a restriction in the configuration of the CMR, the following Option 1 or 2 may be provided.
- Option 1: one CMR may be selected/reported in only one joint reporting group (in other words, the same CMR may not be selected/reported between different joint reporting groups).
- Option 2: the same CMR may be selected/reported between different joint reporting groups.

According to Example 2.2 described above, the UE can appropriately select/report the CMRs.

### [Example 2.3]

Similarly to Example 1.4, a restriction for at least one of the CMRs configured for each CMR group and the CMRs of different CMR groups may be provided.

When the L1-SINR is configured as a report quantity, configuration of the ZP-IMR may be similar to that in Example 1.5.

When the L1-SINR is configured as a report quantity, configuration of the NZP-IMR may be similar to that in Example 1.5.

### [Example 2.4]

The UE may report at least one of a beam index (CRI/SSBRI) indication, a CMR group ID indication, and a value of L1-RSRP/L1-SINR per beam to a base station in one CSI reporting.

All the CMRs may be indexed across all the CMR groups. One beam index corresponding to one CMR may be indicated by using ceil(log₂(MAX_allgroup)) bits. ceil(log₂(MAX_allgroup)) means the number of bits of one beam index corresponding to one CMR when all the CMRs are indexed across all the CMR groups.

In Example 2.1, for each joint reporting group, an ID of a joint reporting group with ceil(log₂(P)) bits may or may not be explicitly reported.

In Example 2.2, for each joint reporting group, an ID of a joint reporting group with ceil(log₂(P₁+P₂+P₃+ ...)) bits may or may not be explicitly reported.

If the ID of the joint reporting group is not reported, a rule/constraint/priority on an order of beams for each joint reporting group may be defined, so that the UE and the base station commonly recognize which beams belong to an identical joint reporting group.

The UE may generate CSI reporting using all the beam indexes corresponding to all the selected/reported CMRs.

One CSI field may indicate the L1-RSRP/L1-SINR value for a beam.

Similar to Example 1.6, the L1-RSRP/L1-SINR value for each beam may be mapped/placed immediately after a corresponding beam index.

Similar to Example 1.6, the L1-RSRP/L1-SINR value for the beam of each joint reporting group may be mapped/placed after a beam index of each joint reporting group.

Similarly to Example 1.6, the L1-RSRP/L1-SINR values for all the beams may be mapped/placed after all the beam indexes.

For quantization of the L1-RSRP/L1-SINR value for each beam, the following Options A or B may be used.

### [Option A]

A strongest value among all the measured values (L1-RSRP/L1-SINR values) for all the beams may be quantized by 7 bits (or another bit size with a high quantization resolution), and the remaining values may be differentially quantized by 4 bits (or another bit size with a low quantization resolution).

In CSI reporting, the ID of the beam and joint reporting group with the largest L1-RSRP/L1-SINR value among all the CMRs may be mapped/placed before other beams.

### [Option B]

A strongest value among all the measured values (L1-RSRP/L1-SINR values) for one joint reporting group may be quantized by 7 bits (or another bit size with a high quantization resolution), and the remaining values in the joint reporting group may be differentially quantized by 4 bits (or another bit size with a low quantization resolution) for each joint reporting group.

In CSI reporting, a beam with the largest L1-RSRP/L1-SINR value among the CMRs for each joint reporting group may be mapped/placed before other beams included in the same joint reporting group.

The UE may support configuration of periodic/aperiodic/semi-persistent beam reporting in the UCI, or event-triggered beam reporting via the MAC CE.

### [Variation 2]

At least one of the number of joint reporting groups (P, P₁, P_{2,} P₃, ...) and the number of CMRs for each joint reporting group (Q, Q₁, Q₂, Q₃, ...) may not be configured by a network. In other words, the UE may determine at least one of P, P1, P_{2,} P₃, ..., and Q, Q₁, Q₂, Q₃, ....

At least one of the maximum number of joint reporting groups (P', P₁', P₂', P₃', ...) and the maximum number of CMRs for each joint reporting group (Q', Q₁', Q₂', Q₃', ...) may be configured by a network. The UE may determine at least one of the number of joint reporting groups that is less than or equal to a maximum number of configured joint reporting groups and the number of CMRs of each joint reporting group that is less than or equal to the maximum number of CMRs per configured joint reporting group.

The size of the CSI reporting may be variable. In order for the network and the UE to have common knowledge about the content of the CSI reporting, the following extensions may be performed:
- CSI reporting of two parts is supported, the first part (CSI Part 1) has a fixed size and represents interpretation and a size of the second part (CSI Part 2).

For example, in the first part, the UE may report the number of joint reporting groups by using ceil(log₂(P')) bits. The UE may report a common number of CMRs of each joint reporting group using ceil(log₂(number of CMR groups)) bits or ceil(log₂(Q')) bits in the first part.

For example, in the first part, the UE may report the number of joint reporting groups by using ceil(log₂(P')) bits. In the first part, the UE may report a different number of CMRs of each joint reporting group using P×ceil(log₂(number of CMR groups)) bits or P×ceil(log₂(Q')) bits.

The MAC CE may activate/indicate/update at least one of the following based on the RRC configuration.
- one or more CMR groups for beam measurement
- one or more PCIs of one or more CMR groups for beam measurement
- the number of joint reporting groups (P, P1, P_{2,} P₃, ...)/number of selected/reported CMRs of each joint reporting group (Q, Q₁, Q₂, Q₃, ...)
- configuration of ZP-IMR/NZP-IMR
- one or more restrictions according to Example 1.4

The MAC CE may include a CMR group ID/a TRP ID/a subcell ID.

If event-based beam reporting/updating is configured, a plurality of UE-reported beams (alternatively, a plurality of beams associated with a plurality of TCI states) may be applied to a plurality of channels/RSs in the configured or defined corresponding DL/UL associated with a corresponding CMR group.

In order to support the above application, a restriction that up to one joint reporting group is reported may be provided. Alternatively, when a plurality of joint reporting groups are reported, a specific rule for selecting a beam to apply to a channel/RS for the corresponding CMR group may be used. The rule may be, for example, using a first joint reporting group among the plurality of joint reporting groups or using a joint reporting group having the least/most beams.

For each TRP/CMR group, RLM-RS/BFD-RS/PL-RS may be updated as a reporting beam for the corresponding CMR group.

According to the second configuration example of the CMR measurement/report described above, it is possible to appropriately control the group-based beam reporting.

According to the third embodiment described above, the CSI reporting for a deactivated SCell can be appropriately performed.

### <Fourth Embodiment>

A fourth embodiment relates to application of a beam (TCI state/spatial relationship/QCL assumption) in a case where an SCell(for example, a deactivated SCell) is used.

In the present disclosure, a beam, a reference signal (for example, SSB/CSI-RS/TRS/SRS/any other reference signal), a TCI state, a DL/UL/joint TCI state, a spatial relationship, a QCL assumption, QCL information, an RS resource of a specific QCL type, and the like may be interchanged with each other.

The UE may apply at least a part of the configuration related to the beam of another cell different from the specific cell (for example, SCell (deactivated SCell)) to the specific cell.

### <<Embodiment 4-1>>

For a beam for an SRS resource in a specific cell/CC (for example, serving cell #A (SCell #A/CC #A)), use/reference/configuration of an RS resource/spatial relation/TCI state of a specific QCL type from another cell/CC (for example, PCell #B/SCell #B/CC #B) may be supported.

For example, the UE may use/reference a configuration of a beam (for example, RS resource/spatial relation/TCI state of a specific QCL type) from another cell/CC (for example, PCell #B/CC #B) for a beam for an SRS resource in a specific cell/CC (for example, serving cell #A (SCell #A/CC #A)).

The configuration of the beam may be configured in the UE using higher layer signaling (RRC/MAC CE), for example.

A particular QCL type may include, for example, at least QCL type D. The specific type may be a QCL type A/B/C/D.

By determining/configuring the beam of the specific CC (CC#A) based on the beam management/beam configuration of the other CCs (PCell#B/CC#B) in this manner, an NW/base station can limit a beam report of the specific CC (CC#A). Therefore, a time required for the beam management in the specific CC can be shortened.

The present embodiment may be applied to, for example, a beam of SRS transmission according to the second embodiment.

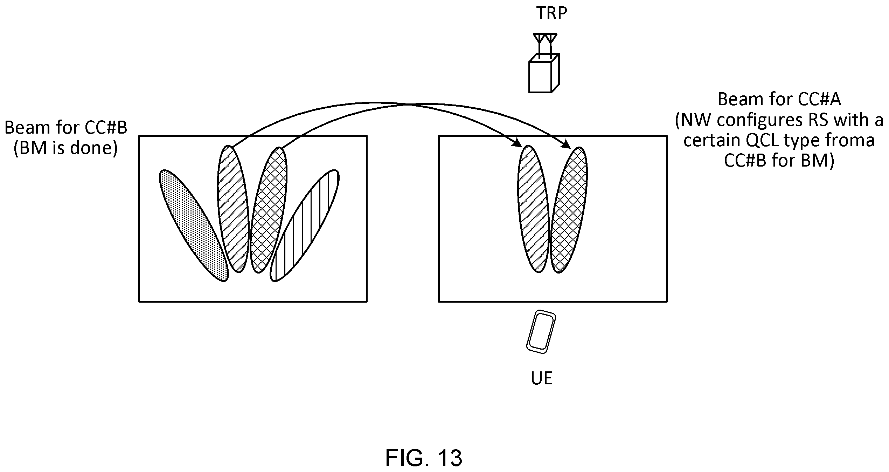

FIG. 13 is a diagram illustrating an example of application of a beam according to the fourth embodiment; In the example illustrated in FIG. 13, the UE completes the beam management in CC#B (PCell). In CC #A (SCell), the UE is configured with an RS (for example, QCL type D RS) of CC #B for beam management.

### <<Embodiment 4-2>>

For a CSI-RS resource/CMR in a specific cell/CC (for example, serving cell #A (SCell #A/CC #A)), use/reference/configuration of a beam (for example, RS resource/spatial relation/TCI state of a specific QCL type) from another cell/CC (for example, PCell #B/SCell #B//CC #B) may be supported.

For example, the UE may use/reference a configuration of a beam (for example, RS resource/spatial relation/TCI state of a specific QCL type) from another cell/CC (for example, PCell #B/SCell #B/CC #B) for a CSI-RS resource/CMR in a specific cell/CC (for example, serving cell #A (SCell #A/CC #A)).

The configuration of the beam may be configured in the UE using higher layer signaling (RRC/MAC CE), for example.

A particular QCL type may include, for example, at least QCL type D. The specific type may be a QCL type A/B/C/D.

By determining/configuring the CSI-RS resource/CMR of a specific CC (CC#A) based on the beam management/beam configuration of another CC (CC#B) in this manner, the NW/base station can shorten a time required for configuring the specific CSI reporting.

The present embodiment may be applied to, for example, a resource related to the CSI reporting according to the third embodiment.

### <<Embodiment 4-3>>

For a beam configuration for a reference signal (for example, SSB/CSI-RS/TRS) in a specific cell/CC (for example, serving cell #A (SCell #A/CC #A)), use/reference/configuration of a beam (for example, RS resource/spatial relation/TCI state of a specific QCL type) from another cell/CC (for example, PCell #B/SCell #B/CC #B) may be supported.

For example, the UE may use/reference a configuration of a beam (for example, RS resource/spatial relation/TCI state of a specific QCL type) from another cell/CC (for example, PCell #B/SCell #B/CC #B) for a beam configuration for a reference signal (for example, SSB/CSI-RS/TRS) in a specific cell/CC (for example, serving cell #A (SCell #A/CC #A)).

The configuration of the beam may be configured in the UE using higher layer signaling (RRC/MAC CE), for example.

A particular QCL type may include, for example, at least QCL type D. The specific type may be a QCL type A/B/C/D.

In this way, by determining/configuring the beam of the reference signal of the specific CC (CC#A) based on the beam management/beam configuration of another CC (CC#B), more sustainable and low-overhead communication can be performed.

It should be noted that the fourth embodiment (Embodiment 4-1/4-2/4-3) may be applied when the UE supports/reports corresponding UE capability information.

In the fourth embodiment, use of information regarding a specific QCL type (for example, QCL type B) may be applied to a case of an intra-frequency CA scenario.

According to the fourth embodiment described above, a beam to be used in the SCell(for example, a deactivated SCell) can be efficiently determined.

### <Supplement>

### [Notification of Information to UE]

Notification of any information to the UE (from a network (NW) (for example, the base station (BS))) in the above-described embodiments (in other words, reception of any information from the BS at the UE) may be performed using physical layer signaling (for example, DCI), higher layer signaling (e.g., RRC signaling, MAC CE), a specific signal/channel (for example, PDCCH, PDSCH, a reference signal), or a combination thereof.

When the notification is performed by a MAC CE, the MAC CE may be identified by including, in a MAC subheader, a new logical channel ID (LCID) not defined in existing standards.

When the notification is performed using DCI, the notification may be performed by a specific field of the DCI, a radio network temporary identifier (RNTI) used for scrambling of cyclic redundancy check (CRC) bits added to the DCI, a format of the DCI, or the like.

In addition, the notification of any information to the UE in the above-described embodiments may be performed periodically, semi-persistently, or aperiodically.

### [Notification of Information from UE]

Notification of any information from the UE (to the NW) (in other words, transmission/report of any information to the BS by the UE) in the above-described embodiments may be performed using physical layer signaling (for example, UCI), higher layer signaling (for example, RRC signaling, a MAC CE), a specific signal/channel (for example, a PUCCH, a PUSCH, a PRACH, or a reference signal), or a combination thereof.

When the notification is performed by a MAC CE, the MAC CE may be identified by including, in a MAC subheader, an LCID not defined in existing standards.

When the notification is performed by a UCI, the notification may be transmitted using a PUCCH or PUSCH.

In addition, the notification of any information from the UE in the above-described embodiments may be performed periodically, semi-persistently, or aperiodically.

### [About Application of Each Embodiment]

At least one of the above-described embodiments may be applied when a specific condition is satisfied. The specific condition may be defined in the standards, or may be notified to the UE/BS using higher layer signaling/physical layer signaling.

At least one of the above-described embodiments may be applied only to a UE that has reported a specific UE capability or supports the specific UE capability.

The particular UE capability may represent support of particular processing/operation/control/information for at least one of the above embodiments.

In addition, the specific UE capability may be capability applied over all the frequencies (in common irrespective of frequency), may be capability for each frequency (for example, one of a cell, a band, a band combination, a BWP, a component carrier, and the like or a combination thereof), may be capability for each frequency range (for example, Frequency Range 1 (FR1), FR2, FR3, FR4, FR5, FR2-1, and FR2-2), may be capability for each subcarrier spacing (SCS), or may be capability for each Feature Set (FS) or Feature Set Per Component-carrier

### (FSPC).

In addition, the specific UE capability may be capability applied across all the duplex schemes (in common irrespective of duplex scheme) or may be capability for each duplex scheme (for example, time division duplex (TDD) and frequency division duplex (FDD)).

In addition, at least one of the above-described embodiments may be applied when the UE is configured/activated/triggered with specific information related to the above-described embodiment (or to perform the operation of the above-described embodiment) by higher layer signaling/physical layer signaling. For example, the specific information may be information representing enabling of the cell-free operation, any RRC parameter for a specific release (for example, Rel. 20 or later), or the like.

When the UE does not support at least one of the above specific UE capabilities or the above specific information is not configured, the UE may apply, for example, an operation of Rel. 15-19.

### (Supplementary Notes)

Regarding one embodiment of the present disclosure, the following supplementary notes of the invention will be given.

### [Supplementary Note 1-1]

A terminal including:
a control section assuming application of at least one of a condition related to a beam, a condition related to a physical cell identifier (PCI), a condition related to a transmission/reception timing, a condition related to transmission power control, a condition related to a specific identifier, and a condition related to a resource for a plurality of sounding reference signal (SRS) resource sets and one or more SRS resources in the plurality of SRS resource sets; and
a transmitting section configured to transmit an SRS using the one or more SRS resources to which the condition is applied.

### [Supplementary Note 1-2]

The terminal according to Supplementary Note 1-1, wherein the condition related to the beam is a condition that quasi-co-location (QCL) source reference signals for a plurality of SRS resources in one SRS resource set have an identical reference signal type.

### [Supplementary Note 1-3]

The terminal according to Supplementary Note 1-1 or 1-2, wherein the condition related to the PCI is a condition that quasi-co-location (QCL) source reference signals for a plurality of SRS resources in one SRS resource set are associated with an identical PCI.

### [Supplementary Note 1-4]

The terminal according to any one of supplementary Notes 1-1 to 1-3, wherein the condition related to the transmission/reception timing is a condition that a plurality of SRS resources in one SRS resource set are associated with at least one of an identical timing advance, an identical timing advance group, and an identical downlink reference timing.

### [Supplementary Note 2-1]

A terminal including:
a receiving section configured to receive a configuration related to a trigger of at least one of sounding reference signal (SRS) transmission and channel state information (CSI) reporting for a deactivated secondary cell; and
a control section configured to control at least one of the SRS transmission and the CSI reporting based on the configuration.

### [Supplementary Note 2-2]

The terminal according to Supplementary Note 2-1, wherein the receiving section further receives downlink control information including a carrier indicator field having the number of bits greater than 3 bits.

### [Supplementary Note 2-3]

The terminal according to Supplementary Note 2-1 or 2-2, wherein the receiving section further receives downlink control information including a carrier indicator field common to the SRS transmission and the CSI reporting.

### [Supplementary Note 2-4]

The terminal according to any one of Supplementary Notes 2-1 to 2-3, wherein the control section applies, to the secondary cell, at least a part of a configuration related to a beam of a cell different from the secondary cell.

### (Radio Communication System)

Hereinafter, a configuration of a radio communication system according to one embodiment of the present disclosure will be described. In this radio communication system, communication is performed using any one of the radio communication methods according to the embodiments of the present disclosure or a combination thereof.

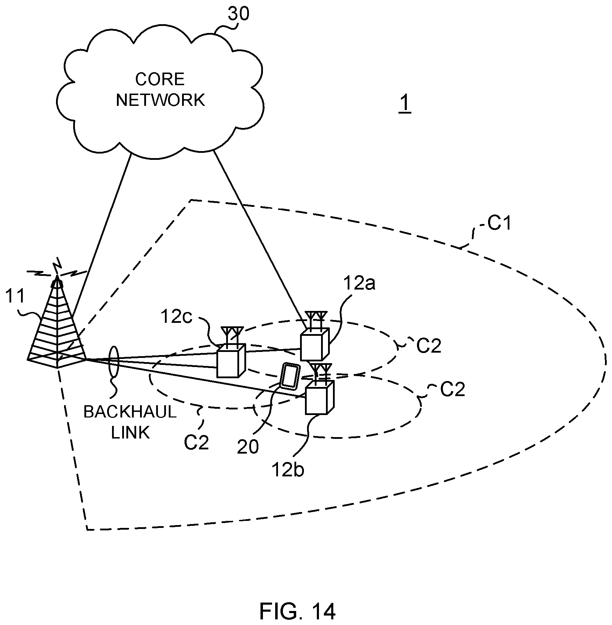

FIG. 14 is a diagram illustrating an example of a schematic configuration of the radio communication system according to one embodiment. A radio communication system 1 (simply referred to as the system 1) may be a system that implements communication using long term evolution (LTE), 5th generation mobile communication system New Radio (5G NR), and the like defined by third generation partnership project (3GPP).

The radio communication system 1 may support dual connectivity between a plurality of radio access technologies (RATs) (multi-RAT dual connectivity (MR-DC)). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is MN, and an LTE (E-UTRA) base station (eNB) is SN.

The radio communication system 1 may support dual connectivity between a plurality of base stations in the same RAT (for example, dual connectivity in which both the MN and the SN are NR base stations (gNB) (NR-NR dual connectivity (NN-DC))).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as "base stations 10" when the base stations 11 and 12 are not distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency band (frequency range 1 (FR1)) or a second frequency band (frequency range 2 (FR2)). The macro cell C1 may be included in the FR1, and the small cell C2 may be included in the FR2. For example, the FR1 may be a frequency band of 6 GHz or less (sub-6 GHz), and the FR2 may be a frequency band higher than 24 GHz (above-24 GHz). It is noted that the frequency bands, definitions, and the like of the FR1 and FR2 are not limited thereto, and, for example, the FR1 may correspond to a frequency band higher than the FR2.

Further, the user terminal 20 may perform communication on each CC using at least one of time division duplex (TDD) and frequency division duplex (FDD).

The plurality of base stations 10 may be connected to each other in a wired manner (for example, an optical fiber in compliance with common public radio interface (CPRI), an X2 interface, or the like) or in a radio manner (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of evolved packet core (EPC), 5G core network (5GCN), next generation core (NGC), or the like.

The core network 30 may include, for example, network functions (NFs) such as a user plane function (UPF), an access and mobility management function (AMF), a session management function (SMF), a unified data management (UDM), an application function (AF), a data network (DN), a location management function (LMF), or an operation, administration and maintenance (management) (OAM). Note that a plurality of functions may be provided by one network node. In addition, communication with an external network (for example, the Internet) may be performed via the DN.

The user terminal 20 may be a terminal that corresponds to at least one of communication methods such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. It is noted that in the radio communication system 1, another radio access method (for example, another single carrier transmission method or another multi-carrier transmission method) may be used as the UL and DL radio access method.

In the radio communication system 1, a downlink shared channel (physical downlink shared channel (PDSCH)) shared by the user terminals 20, a broadcast channel (physical broadcast channel (PBCH)), a downlink control channel (physical downlink control channel (PDCCH)), and the like may be used as downlink channels.

In the radio communication system 1, an uplink shared channel (physical uplink shared channel (PUSCH)) shared by the user terminals 20, an uplink control channel (physical uplink control channel (PUCCH)), a random access channel (physical random access channel (PRACH)), and the like may be used as uplink channels.

User data, higher layer control information, a system information block (SIB), and the like are transmitted on the PDSCH. The user data, higher layer control information, and the like may be transmitted on the PUSCH. Furthermore, a master information block (MIB) may be transmitted on the PBCH.

Lower layer control information may be transmitted on the PDCCH. The lower layer control information may include, for example, downlink control information (DCI) including scheduling information of at least one of the PDSCH and the PUSCH.

It is noted that the DCI that schedules the PDSCH may be referred to as DL allocation, DL DCI, or the like, and the DCI that schedules PUSCH may be referred to as UL grant, UL DCI, or the like. It is noted that the PDSCH may be interchanged with DL data, and the PUSCH may be interchanged with UL data.

For detection of the PDCCH, a control resource set (CORESET) and a search space may be used. The CORESET corresponds to a resource for searching for DCI. The search space corresponds to a search area and a search method for PDCCH candidates. One CORESET may be associated with one or more search spaces. The UE may monitor a CORESET associated with a certain Search Space based on a Search Space configuration.

One search space may correspond to a PDCCH candidate corresponding to one or more aggregation levels. One or more search spaces may be referred to as a search space set. It is noted that "search space", "search space set", "search space configuration", "search space set configuration", "CORESET", "CORESET configuration", and the like in the present disclosure may be interchanged with each other.

Uplink control information (UCI) including at least one of channel state information (CSI), delivery acknowledgement information (which may be referred to as, for example, hybrid automatic repeat request acknowledgement (HARQ-ACK), ACK/NACK, or the like), and scheduling request (SR) may be transmitted on the PUCCH. A random access preamble for establishing a connection with a cell may be transmitted on the PRACH.

It is noted that in the present disclosure, downlink, uplink, and the like may be expressed without "link". Various channels may be expressed without adding "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) and a secondary synchronization signal (SSS). A signal block including the SS (PSS, SSS) and the PBCH (and the DMRS for the PBCH) may be referred to as an SS/PBCH block, an SS block (SSB), or the like. It is noted that, the SS, the SSB, or the like may also be referred to as a reference signal.

In the radio communication system 1, a sounding reference signal (SRS), a demodulation reference signal (DMRS), and the like may be transmitted as an uplink reference signal (UL-RS). DMRS may be referred to as "user terminal-specific reference signals (UE-specific Reference Signals)."

### (Base Station)

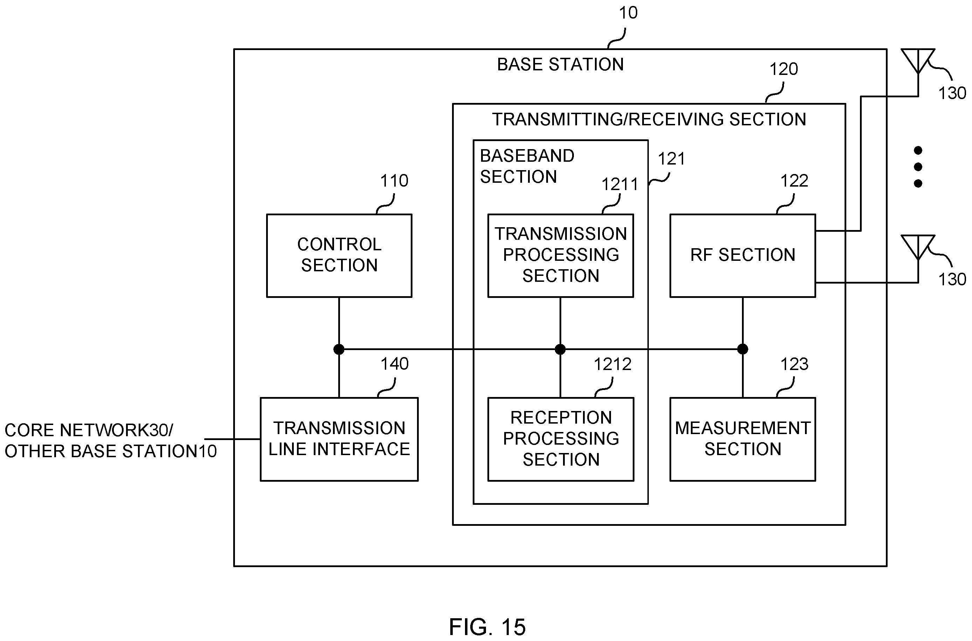

FIG. 15 is a diagram illustrating an example of a configuration of a base station according to one embodiment. The base station 10 includes a control section 110, a transmitting/receiving section 120, a transmitting/receiving antenna 130, and a transmission line interface 140. It is noted that one or more of the control sections 110, one or more of the transmitting/receiving sections 120, one or more of the transmitting/receiving antennas 130, and one or more of the transmission line interfaces 140 may be included.

It is noted that this example mainly describes a functional block which is a characteristic part of the present embodiment, and it may be assumed that the base station 10 also has another functional block necessary for radio communication. A part of processing of each section described below may be omitted.

The control section 110 controls the entire base station 10. The control section 110 can include a controller, a control circuit, or the like, which is described based on common recognition in a technical field according to the present disclosure.

The control section 110 may control signal generation, scheduling (for example, resource allocation or mapping), and the like. The control section 110 may control transmission/reception, measurement, and the like using the transmitting/receiving section 120, the transmitting/receiving antenna 130, and the transmission line interface 140. The control section 110 may generate data to be transmitted as a signal, control information, a sequence, and the like, and may forward the data, the control information, the sequence, and the like to the transmitting/receiving section 120. The control section 110 may perform call processing (such as configuration or releasing) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can include a transmitter/receiver, an RF circuit, a base band circuit, a filter, a phase shifter, a measurement circuit, a transmission/reception circuit, or the like, which is described based on common recognition in a technical field according to the present disclosure.

The transmitting/receiving section 120 may be constituted as an integrated transmitting/receiving section, or may be constituted by a transmitting section and a receiving section. The transmitting section may include the transmission processing section 1211 and the RF section 122. The receiving section may include the reception processing section 1212, the RF section 122, and the measurement section 123.

The transmitting/receiving antenna 130 can be configured by an antenna described based on common understanding in the technical field according to the present disclosure, for example, an array antenna or the like.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a Tx beam or a reception beam using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like on, for example, data, control information, and the like acquired from the control section 110, to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog conversion on the bit string to be transmitted, to output a baseband signal.

The transmitting/receiving section 120 (RF section 122) may perform modulation to a radio frequency band, filtering processing, amplification, and the like on the baseband signal, and may transmit a signal in the radio frequency band via the transmitting/receiving antenna 130.

Meanwhile, the transmitting/receiving section 120 (RF section 122) may perform amplification, filtering processing, demodulation to a baseband signal, and the like on the signal in the radio frequency band received by the transmitting/receiving antenna 130.

The transmitting/receiving section 120 (reception processing section 1212) may apply reception processing such as analog-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 120 (measurement section 123) may perform measurement on the received signal. For example, the measurement section 123 may perform radio resource management (RRM) measurement, channel state information (CSI) measurement, and the like based on the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. A measurement result may be output to the control section 110.

The transmission line interface 140 may transmit/receive a signal (backhaul signaling) to and from an apparatus (for example, a network node providing the NF) included in the core network 30, another base station 10, and the like, and may acquire, transmit, and the like user data (user plane data), control plane data, and the like for the user terminal 20.

It is noted that, the transmitting section and the receiving section of the base station 10 in the present disclosure may include at least one of the transmitting/receiving section 120, the transmitting/receiving antenna 130, and the transmission line interface 140.

For a plurality of sounding reference signal (SRS) resource sets and one or more SRS resources in the plurality of SRS resource sets, the control section 110 may determine application of at least one of a condition related to a beam, a condition related to a physical cell identifier (PCI), a condition related to transmission/reception timing, a condition related to transmission power control, a condition related to a specific identifier, and a condition related to a resource. The transmitting/receiving section 120 may receive the SRS using the one or more SRS resources to which the condition is applied.

The transmitting/receiving section 120 may transmit a configuration related to a trigger of at least one of sounding reference signal (SRS) transmission and channel state information (CSI) reporting for a deactivated secondary cell. The control section 110 may indicate at least one of the SRS transmission and the CSI reporting using the configuration (second to fourth embodiments).

### (User Terminal)

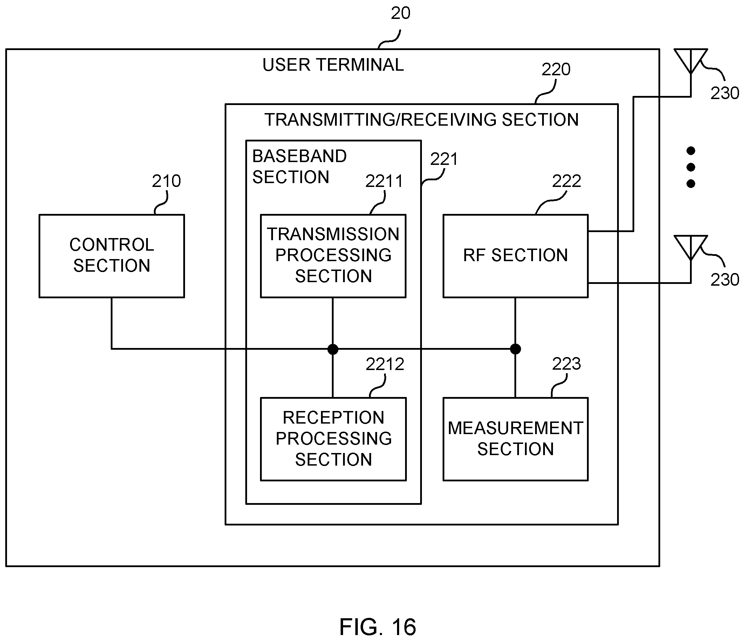

FIG. 16 is a diagram illustrating an example of a configuration of the user terminal according to one embodiment. The user terminal 20 includes a control section 210, a transmitting/receiving section 220, and a transmitting/receiving antenna 230. It is noted that one or more of the control sections 210, one or more of the transmitting/receiving sections 220, and one or more of the transmitting/receiving antennas 230 may be included.

It is noted that, although this example mainly describes functional blocks of a characteristic part of the present embodiment, it may be assumed that the user terminal 20 includes other functional blocks that are necessary for radio communication as well. A part of processing of each section described below may be omitted.

The control section 210 controls the entire user terminal 20. The control section 210 can include a controller, a control circuit, and the like that are described based on common recognition in the technical field related to the present disclosure.

The control section 210 may control signal generation, mapping, and the like. The control section 210 may control transmission/reception, measurement, and the like using the transmitting/receiving section 220 and the transmitting/receiving antenna 230. The control section 210 may generate data to be transmitted as a signal, control information, a sequence, and the like, and may forward the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a baseband circuit, a filter, a phase shifter, a measurement circuit, a transmission/reception circuit, and the like that are described based on common recognition in the technical field related to the present disclosure.

The transmitting/receiving section 220 may be formed as an integrated transmitting/receiving section, or may include a transmitting section and a receiving section. The transmitting section may include the transmission processing section 2211 and the RF section 222. The receiving section may include the reception processing section 2212, the RF section 222, and the measurement section 223.

The transmitting/receiving antenna 230 can include an antenna that is described based on common recognition in the technical field related to the present disclosure, for example, an array antenna or the like.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a Tx beam and a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like, for example, on data, control information, and the like acquired from the control section 210, to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-to-analog conversion on the bit string to be transmitted, to output a baseband signal.

It is noted that whether to apply DFT processing may be determined based on configuration of transform precoding. When the transform precoding is enabled for a channel (for example, PUSCH), the transmitting/receiving section 220 (transmission processing section 2211) may perform DFT processing as the transmission processing to transmit the channel by using a DFT-s-OFDM waveform, and otherwise, DFT processing does not have to be performed as the transmission processing.

The transmitting/receiving section 220 (RF section 222) may perform modulation to a radio frequency band, filtering processing, amplification, and the like on the baseband signal, to transmit a signal in the radio frequency band via the transmitting/receiving antenna 230.

Meanwhile, the transmitting/receiving section 220 (RF section 222) may perform amplification, filtering processing, demodulation to a baseband signal, and the like on the signal in the radio frequency band received by the transmitting/receiving antenna 230.

The transmitting/receiving section 220 (reception processing section 2212) may apply reception processing such as analog-to-digital conversion, FFT processing, IDFT processing (if necessary), filtering processing, demapping, demodulation, decoding (which may include error correction decoding), MAC layer processing, RLC layer processing, or PDCP layer processing on the acquired baseband signal to acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. A measurement result may be output to the control section 210.

Note that the measurement section 223 may derive channel measurement for CSI computation, based on a channel measurement resource. The channel measurement resource may be, for example, a non-zero power (NZP) CSI-RS resource. In addition, the measurement section 223 may derive interference measurement for CSI computation, based on an interference measurement resource. The interference measurement resource may be at least one of an NZP CSI-RS resource for interference measurement, a CSI-interference measurement (IM) resource, or the like. Note that the CSI-IM may be referred to as CSI-interference management (IM), and may be interchanged with a zero power (ZP) CSI-RS. Note that, in the present disclosure, CSI-RS, NZP CSI-RS, ZP CSI-RS, CSI-IM, CSI-SSB, and the like may be interchanged with each other.

It is noted that the transmitting section and the receiving section of the user terminal 20 in the present disclosure may include at least one of the transmitting/receiving section 220 and the transmitting/receiving antenna 230.

For a plurality of sounding reference signal (SRS) resource sets and one or more SRS resources in the plurality of SRS resource sets, the control section 210 may assume application of at least one of a condition related to a beam, a condition related to a physical cell identifier (PCI), a condition related to a transmission/reception timing, a condition related to transmission power control, a condition related to a specific identifier, and a condition related to a resource. The transmitting/receiving section 220 may transmit the SRS using the one or more SRS resources to which the condition is applied (first embodiment).

The condition related to the beam may be a condition that quasi-co-location (QCL) source reference signals for a plurality of SRS resources in one SRS resource set have the same reference signal type (first embodiment).

The condition related to the PCI may be a condition that quasi-co-location (QCL) source reference signals for a plurality of SRS resources in one SRS resource set are associated with the same PCI (first embodiment).

The condition related to the transmission/reception timing may be a condition that a plurality of SRS resources in one SRS resource set are associated with at least one of the same timing advance, the same timing advance group, and the same downlink reference timing (first embodiment).

The transmitting/receiving section 220 may receive configuration related to a trigger of at least one of sounding reference signal (SRS) transmission and channel state information (CSI) reporting for a deactivated secondary cell. The control section 210 may control at least one of the SRS transmission and the CSI reporting based on the configuration (second/third embodiments).

The transmitting/receiving section 220 may further receive downlink control information including a carrier indicator field having the number of bits larger than 3 bits (second/third embodiments).

The transmitting/receiving section 220 may further receive downlink control information including a common carrier indicator field for the SRS transmission and the CSI reporting (second/third embodiments).

The control section 210 may apply at least a part of the configuration related to a beam of a cell different from the secondary cell to the secondary cell (fourth embodiment).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

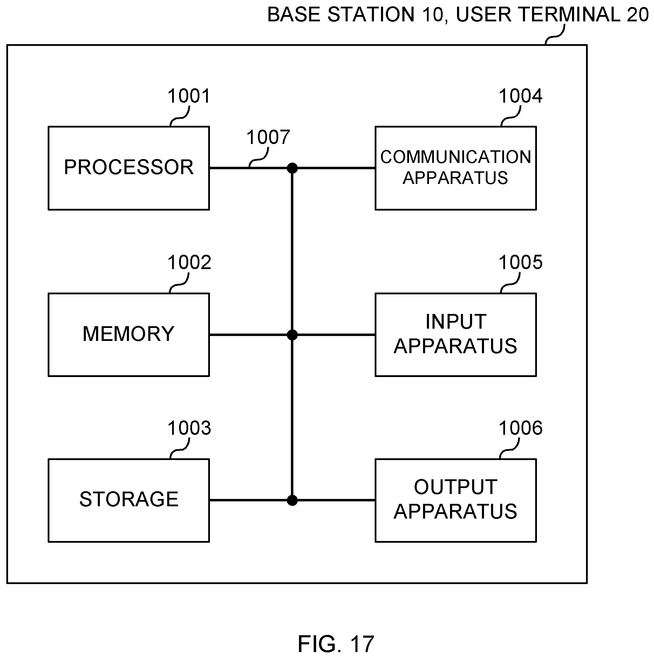

For example, a base station, a user terminal, and so on according to one embodiment of the present disclosure may function as a computer that executes the processes of the radio communication method of the present disclosure. FIG. 17 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of the configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

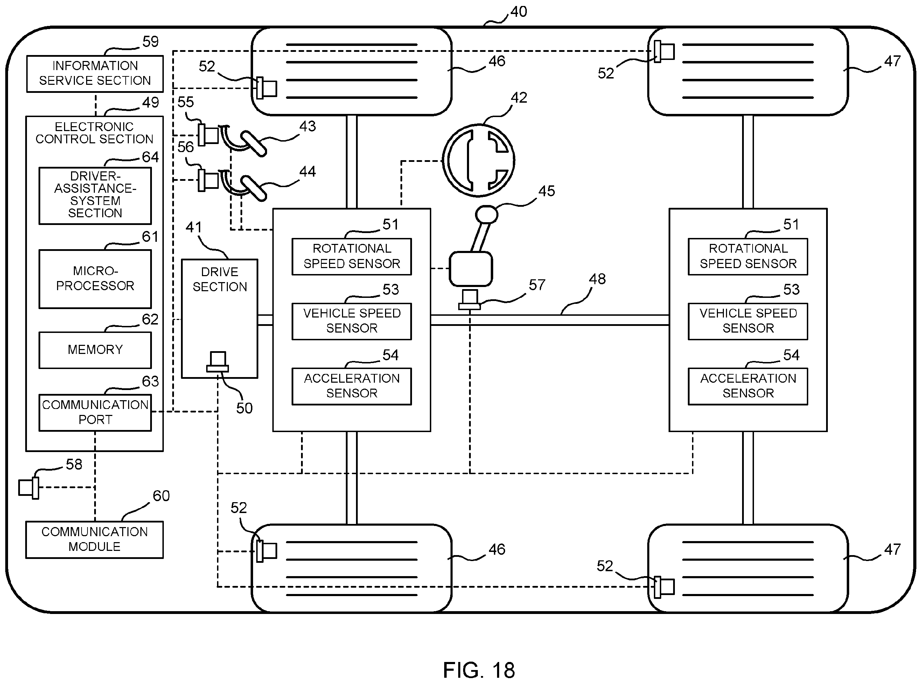

FIG. 18 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure.

## Claims

1. A terminal comprising:
a control section assuming application of at least one of a condition related to a beam, a condition related to a physical cell identifier (PCI), a condition related to a transmission/reception timing, a condition related to transmission power control, a condition related to a specific identifier, and a condition related to a resource, for a plurality of sounding reference signal (SRS) resource sets and one or more SRS resources in the plurality of SRS resource sets; and
a transmitting section configured to transmit an SRS using the one or more SRS resources to which the condition is applied.

2. The terminal according to claim 1, wherein the condition related to the beam is a condition that quasi-co-location (QCL) source reference signals for a plurality of SRS resources in one SRS resource set have an identical reference signal type.

3. The terminal according to claim 1, wherein the condition related to the PCI is a condition that quasi-co-location (QCL) source reference signals for a plurality of SRS resources in one SRS resource set are associated with an identical PCI.

4. The terminal according to claim 1, wherein the condition related to the transmission/reception timing is a condition that a plurality of SRS resources in one SRS resource set are associated with at least one of an identical timing advance, an identical timing advance group, and an identical downlink reference timing.

5. A radio communication method of a terminal, comprising:
a step of assuming application of at least one of a condition related to a beam, a condition related to a physical cell identifier (PCI), a condition related to a transmission/reception timing, a condition related to transmission power control, a condition related to a specific identifier, and a condition related to a resource, for a plurality of sounding reference signal (SRS) resource sets and one or more SRS resources in the plurality of SRS resource sets; and
a step of transmitting an SRS using the one or more SRS resources to which the condition is applied.

6. A base station comprising:
a control section assuming application of at least one of a condition related to a beam, a condition related to a physical cell identifier (PCI), a condition related to a transmission/reception timing, a condition related to transmission power control, a condition related to a specific identifier, and a condition related to a resource, for a plurality of sounding reference signal (SRS) resource sets and one or more SRS resources in the plurality of SRS resource sets; and
a receiving section configured to receive the SRS using the one or more SRS resources to which the condition is applied.
